# EUROPÄISCHE PATENTSCHRIFT

(11) **EP 4 602 106 B1**
(45) Veröffentlichungstag und Bekanntmachung des Hinweises auf die Patenterteilung: **09.09.2026**
(21) Anmeldenummer: 23789902.6
(22) Anmeldetag: 11.10.2023
(51) Int. Cl.: C08K 5/5445, C08L 83/04

(54) **EMISSIONSFREIE SILIKONKAUTSCHUKMASSEN**
EMISSION FREE SILICONE RUBBER COMPOUNDS
COMPOSÉS DE CAOUTCHOUC DE SILICONE SANS ÉMISSION

(30) Priorität: 13.10.2022 DE 102022126732
(43) Veröffentlichungstag der Anmeldung: 20.08.2025
(73) Patentinhaber: Nitrochemie Aschau GmbH, 84544 Aschau am Inn (DE)
(72) Erfinder: LANGREITER, Andreas, 84552 Geratskirchen (DE); KRUPP, Alexis, 84478 Waldkraiburg (DE); PICHL, Ulrich, 84544 Aschau am Inn (DE)
(74) Vertreter: Müller Schupfner & Partner Patent- und Rechtsanwaltspartnerschaft mbB (Muc)
(86) Internationale Anmeldenummer: PCT/EP2023/078188
(87) Internationale Veröffentlichungsnummer: WO 2024/079186

(56) Entgegenhaltungen:
- EP-A1- 3 613 803

## Beschreibung

Die Erfindung betrifft eine Zusammensetzung zur Herstellung von Silikonkautschukmassen, umfassend einen Vernetzer, einen Metallkatalysator und ein Aminosilan sowie die Verwendung der Zusammensetzung als Dichtmittel, Klebstoff, Beschichtungsmittel, Fugenmaterial, Vergussmasse, Adhäsiv und in Farben sowie eine Silikonkautschukmasse, erhältlich durch Aushärten der Zusammensetzung.

Als Werkstoffe mit elastischen Eigenschaften finden Silikonkautschukmassen vielseitige Anwendung, beispielsweise als Dichtstoffe, Fugenmaterial, Beschichtungsmittel, Vergussmasse und Klebstoffe für verschiedenste Materialien wie Glas, Porzellan, Keramik, Stein, Kunststoffe, Metalle, Holz etc. Mit Vorteil finden kalthärtende Silikonkautschukmassen Anwendung, die bei Raumtemperatur aushärten. Sie werden auch RTV-(Raumtemperatur-vernetzende)-Silikonkautschukmassen genannt. Diese können beispielsweise als Einkomponenten-RTV-Silikonkautschukmassen (RTV-1) oder als Zweikomponenten-RTV-Silikonkautschukmassen (RTV-2) eingesetzt werden. RTV-1-Silikonkautschukmassen sind üblicherweise plastisch verformbare Mischungen aus Polyorganosiloxanen mit vernetzbaren funktionellen Gruppen und geeigneten Vernetzern (Härtern), die unter Feuchtigkeitsausschluss aufbewahrt werden. Diese Mischungen vernetzen unter dem Einfluss von Wasser wie beispielsweise Luftfeuchtigkeit bei Raumtemperatur. Dieser Vorgang wird als Aushärten der Vernetzer bezeichnet. Bei den RTV-2-Silikonkautschukmassen werden zwei getrennt gelagerte Zusammensetzungen zunächst gemischt und die Mischung härtet dann unter dem Einfluss von Wasser oder Luftfeuchtigkeit bei Raumtemperatur aus.

In kalthärtenden Silikonkautschukmassen werden in der Regel Polyorganosiloxane (Silikone) eingesetzt, die zwei oder mehr vernetzbare funktionelle Gruppen tragen, zusammen mit polyfunktionellen Härtern. Große Bedeutung kommt hierbei den α,ω-Dihydroxypolyorganosiloxanen als difunktionelle Polyorganosiloxane zu. Die Vernetzungsmittel bzw. Härter besitzen oftmals hydrolysierbare SiX-Gruppen. Bei der Vernetzung werden die X-Gruppen als Abgangsgruppen freigesetzt. Bekannte Abgangsgruppen sind beispielsweise Alkohole und Oxime.

In der EP 3 392 313 A1 und der EP 3 613 803 A1 sind härtbare Silikonkautschukmassen beschrieben, wobei die Zusammensetzung einen Härter (Vernetzer) in Form eines Silans mit entsprechenden Austrittsgruppen (Abgangsgruppen) umfasst.

Solche Zusammensetzungen weisen jedoch den Nachteil auf, dass die Austrittsgruppen, beispielsweise Alkohole, Hydroxycarbonsäureester oder Oxime, nach dem Aushärten aus den Silikonkautschukmassen ausdiffundieren und somit in die Umwelt emittiert werden. Die emittierten chemischen Substanzen sind teilweise gesundheitsschädlich, oftmals umweltschädlich und weisen häufig auch einen unangenehmen Geruch auf. Zudem führt die Emission zu einem Masse- und Volumenschwund des Silikonkautschukmaterials bzw. Dichtstoffs. In der Regel findet ein Masseverlust von etwa 3 - 4 Gew.-% statt. Dadurch kann ein Dichtstoff rissig werden und seine Dichtfunktion nicht mehr optimal wahrnehmen.

Aufgabe der Erfindung ist es daher, diese Nachteile zu überwinden und eine Zusammensetzung bereitzustellen, die bei Raumtemperatur aushärtet und keine oder möglichst wenig chemische Substanzen emittiert, ohne die gewünschten Eigenschaften für raumtemperaturvernetzende Silikonkautschukmassen negativ zu beeinflussen, insbesondere deren Lagerstabilität, Aushärtbarkeit, und die gute Haftung auf allen gängigen Untergründen.

Diese Aufgabe wird durch die im Anspruch 1 angegebene Zusammensetzung, die im Anspruch 10 angegebene Zusammensetzung, die im Anspruch 14 angegebene Verwendung und die im Anspruch 15 angegebene Silikonkautschukmasse gelöst. Vorteilhafte Ausgestaltungen finden sich unter anderem in den Unteransprüchen und werden nachfolgend noch näher erläutert.

In einer Ausführungsform betrifft die Erfindung eine Zusammensetzung erhältlich durch Vermischen der Komponenten
(a) Vernetzer oder Vernetzermischung, erhältlich durch Reaktion von

   (HX(CR^{c}₂)ₒY(CR^{c}₂)ₒX(CR^{c}₂)ₒ)₄₋ₚSiKₚ,

   worin
   jedes X unabhängig voneinander steht für O, NR^{b}, S, oder PR^{b},
   jedes R^{b} unabhängig voneinander steht für H, Trialkylsilyl oder einen gesättigten oder ungesättigten, optional substituierten Kohlenwasserstoffrest mit 1 - 16 C-Atomen,
   jedes Y unabhängig voneinander steht für eine C-C-Bindung, CR^{c}₂, O, NR^{e} oder PR^{e}, worin
   jedes R^{c} unabhängig voneinander steht für H oder einen gesättigten oder ungesättigten, optional substituierten Kohlenwasserstoffrest mit 1 - 16 C-Atomen,
   jedes R^{e} unabhängig voneinander steht für H oder einen gesättigten oder ungesättigten, optional substituierten Kohlenwasserstoffrest mit 1 - 16 C-Atomen,
   jedes K unabhängig voneinander steht für Cl, OR^{d} oder ON=CR^{g}₂, jedes R^{d} unabhängig voneinander steht für einen gesättigten oder ungesättigten, optional substituierten Kohlenwasserstoffrest mit 1 - 16 C-Atomen,
   jedes R^{g} unabhängig voneinander steht für H oder einen gesättigten oder ungesättigten, optional substituierten Kohlenwasserstoffrest mit 1 - 16 C-Atomen,
   jedes o unabhängig voneinander eine ganze Zahl von 1 bis 8 ist und
   p = 2 oder 3 ist,
(b) Metallkatalysator und
(c) Aminosilan.

Überraschenderweise werden aus dieser Zusammensetzung nach dem Aushärten keine oder nahezu keine chemischen Substanzen emittiert. Dies hat zum einen den Vorteil, dass die Zusammensetzung beim Aushärten keine unangenehmen Gerüche freisetzt und keine toxischen Substanzen emittiert werden. Ferner können emittierte Substanzen das umgebende Material der Anwendung negativ beeinflussen oder zerstören, wie es zum Beispiel bei Essigsäure aus Acetatgruppen mit Beton, Stahl oder Marmor der Fall ist. Zudem wird dadurch der Volumenschwund verringert. Ein Volumenschwund geht stets mit einer Verformung der Zusammensetzung einher, wodurch insbesondere das Risiko von Undichtigkeiten der erfindungsgemäßen Zusammensetzung nach dem Aushärten der Silikonkautschukmassen vermindert wird. Ein verringerter Volumenschwund ist somit vorteilhaft, da so die technischen Eigenschaften der Zusammensetzung verbessert werden. Gleichzeitig weist die Zusammensetzung ansonsten gleich gute Eigenschaften auf wie die derzeit modernsten und besten RTV-Silikonkautschukmassen, beispielsweise hinsichtlich Lagerstabilität, Aushärtbarkeit etc.

Eine weitere Ausführungsform der Erfindung betrifft eine Zusammensetzung, umfassend die Komponenten
(a) mindestens einen Vernetzer der Formel (X(CR^{c}₂)ₒZ(CR^{c}₂)ₒZ(CR^{c}₂)ₒ)Si, worin jedes Z unabhängig voneinander steht für N, P, N(CR^{c}₂)ₒX oder P(CR^{c}₂)ₒX und X, R^{c} und o wie oben definiert sind,
(b) mindestens einen Metallkatalysator und
(c) mindestens ein Aminosilan.

Eine weitere Ausführungsform der Erfindung betrifft die Verwendung der erfindungsgemäßen Zusammensetzung zur Herstellung eines Dichtmittels, Klebstoffs, Beschichtungsmittels, Fugenmaterials, einer Vergussmasse, eines Adhäsives und/oder einer Farbe.

Zudem betrifft eine Ausführungsform der Erfindung eine Silikonkautschukmasse, erhältlich durch Aushärten einer erfindungsgemäßen Zusammensetzung, bevorzugt in Gegenwart von Wasser, beispielsweise Luftfeuchtigkeit.

Unter "Vernetzern" oder "Härtern" werden im Sinne der Erfindung insbesondere vernetzungsfähige Silanverbindungen verstanden, die abspaltbare Gruppen (sogenannte Abgangsgruppen oder Austrittsgruppen) aufweisen, wobei Austrittsgruppen kovalent aneinander gebunden sein können. Eine Austrittsgruppe kann insbesondere auch kovalent an einen Rest gebunden sein, der an das Silizium-Atom des Vernetzers gebunden bleibt, sodass die Austrittsgruppe nach dem Austritt weiterhin kovalent ans Silizium gebunden ist. Der Begriff "Vernetzer" umfasst insbesondere auch "Vernetzersysteme", die mehr als eine vernetzungsfähige Silanverbindung enthalten können.

Unter einer "kovalenten Bindung" (auch als Atombindung oder Elektronenpaarbindung genannt) wird im Sinne der Erfindung wie üblich eine Bindung zwischen Atomen von Nichtmetallen verstanden, bei denen sich Elektronenpaare zwischen den Atomen ausbilden und die Atome dadurch zusammengehalten werden. Bei einer kovalenten Bindung kann es sich um eine Einfachbindung (z. B. C-C), eine Doppelbindung (C=C) oder auch um Dreifachbindungen (C=C) handeln. Wenn Reste oder Gruppen "kovalent aneinander gebunden" sind, wird darunter verstanden, dass die Reste oder Gruppen "kovalent verknüpft" oder "kovalent miteinander verbunden" sind.

"Dichtungsmittel", "Dichtmittel", "Dichtstoffe" oder "Dichtungsmassen" werden vorliegend synonym verwendet und bezeichnen elastische, in flüssiger bis zähflüssiger Form oder als biegsame Profile oder Bahnen aufgebrachte Stoffe zum Abdichten einer Oberfläche, insbesondere gegen Wasser, Gase oder andere Medien. Eine ausgehärtete erfindungsgemäße Zusammensetzung kann vorzugsweise ein Dichtungsmittel, Dichtstoff oder eine Dichtungsmasse sein.

Die Bezeichnung "Klebstoff" bezieht sich auf Stoffe, die Fügeteile durch Flächenhaftung (Adhäsion) und/oder innere Festigkeit (Kohäsion) verbinden. Von diesem Begriff sind insbesondere Leim, Kleister, Dispersions-, Lösemittel-, Reaktions- und Kontakt-Klebstoffe erfasst.

"Beschichtungsmittel" sind alle Mittel zum Beschichten einer Oberfläche.

Bei "Vergussmassen" oder auch "Kabelvergussmassen" handelt es sich im Sinne der Erfindung um heiß oder kalt zu verarbeitende Massen zum Vergießen von Kabeln und/oder Kabelzubehörteilen.

Unter der Bezeichnung "Alkylgruppe" wird ein gesättigter Kohlenwasserstoffrest verstanden. Alkylgruppen weisen insbesondere die Formel -CₙH₂ₙ₊₁ auf. Die Bezeichnung "mit 1 bis 16 C-Atomen" bezeichnet insbesondere einen Kohlenwasserstoff mit 1 bis 16 Kohlenstoffatomen. Beispiele für Alkylgruppen sind Methyl-, Ethyl-, Propyl-, Butyl-, Isopropyl-, iso-Butyl-, sec-Butyl-, tert-Butyl-, n-Pentyl- und Ethylhexyl. Alkylgruppen können insbesondere auch substituiert sein, auch wenn dies nicht explizit angegeben ist.

"Geradkettige Alkylgruppen" bezeichnen Alkylgruppen, die keine Verzweigungen enthalten. Beispiele für geradkettige Alkylgruppen sind Methyl-, Ethyl-, n-Propyl-, n-Butyl-, n-Pentyl-, n-Hexyl-, n-Heptyl und n-Octyl. Die Begriffe "Gruppe" und "Rest" werden vorliegend synonym verwendet.

"Verzweigte Alkylgruppen" bezeichnen Alkylgruppen die nicht geradkettig sind, in denen also insbesondere die Kohlenwasserstoffkette eine Gabelung aufweist. Beispiele für verzweigte Alkylgruppen sind Isopropyl-, iso-Butyl-, sec-Butyl-, tert-Butyl-, sec-Pentyl-, 3-Pentyl-, 2-Methylbutyl-, iso-Pentyl-, 3-Methylbut-2-yl, 2-Methylbut-2-yl-, Neopentyl-, Ethylhexyl-, und 2-Ethylhexyl.

Unter der Bezeichnung "Alkenylgruppen" werden Kohlenwasserstoffreste verstanden, die mindestens eine Doppelbindung enthalten. Beispielweise weist eine Alkenylgruppe mit einer Doppelbindung insbesondere die Formel -CₙH₂ₙ₋₁ auf. Alkenylgruppen können jedoch auch mehr als eine Doppelbindung aufweisen. Die Anzahl der Wasserstoffatome variiert dabei in Abhängigkeit der Anzahl der Doppelbindungen in der Alkenylgruppe. Beispiele für Alkenylgruppen sind Vinyl-, Allyl-, 2-Butenyl- und 2-Hexenyl-.

"Geradkettige Alkenylgruppen" bezeichnen Alkenylgruppen, die keine Verzweigungen enthalten. Beispiele für geradkettige Alkenylgruppen sind Vinyl-, Allyl-, n-2-Butenyl- und n-2-Hexenyl-.

"Verzweigte Alkenylgruppen" bezeichnen Alkenylgruppen die nicht geradkettig sind, in denen also insbesondere die Kohlenwasserstoffkette eine Gabelung aufweist. Beispiele für verzweigte Alkenylgruppen sind 2-Methyl-2-Propenyl-, 2-Methyl-2-Butenyl- und 2-Ethyl-2-Pentenyl-.

Unter der Bezeichnung "Alkinylgruppen" werden Kohlenwasserstoffreste verstanden, die mindestens eine Dreifachbindung enthalten. Beispielweise weist eine Alkinylgruppe mit einer Dreifachbindung die Formel -CₙH₂ₙ₋₃ auf. Alkinylgruppen können auch mehr als eine Dreifachbindung enthalten. Ferner können Doppel- und Dreifachbindungen enthalten sein. Beispiele sind Ethinyl, Propinyl, Butinyl oder Pentinyl. Alkinylgruppen können substituiert oder unsubstituiert sein und sie können unverzweigt oder verzweigt sein.

Alkandiyl-, Alkendiyl- oder Alkindiylreste sind entsprechende Reste, die jeweils über zwei Bindungsstellen verfügen. Dementsprechend sind Alkantriyl-, Alkentriyl- oder Alkintriylreste Reste, die über drei Bindungsstellen verfügen.

Unter "Arylgruppen", "Arylresten" oder "aromatischen Resten" werden mono- oder polycyclische aromatische Reste verstanden. "Aromatisch" bezeichnet cyclische, planare Kohlenwasserstoffe mit konjugiertem, aromatischem π-Elektronensystem. Arylgruppen sind beispielsweise monocyclische (z.B. Phenyl-), bicyclische (z.B. Indenyl-, Naphthalenyl, Tetrahydronapthyl, oder Tetrahydroindenyl) und tricyclische (z.B. Fluorenyl-, Tetrahydrofluorenyl-, Anthracenyl-, oder Tetrahydroanthracenyl-) Ringsysteme, in denen das monocyclische Ringsystem oder mindestens einer der Ringe in einem bicyclischen oder tricyclischen Ringsystem aromatisch ist. Insbesondere bezeichnet eine C4- bis C14-Arylgruppe eine Arylgruppe, die 4 bis 14 Kohlenstoffatome aufweist. Arylgruppen können insbesondere auch substituiert sein, auch wenn dies nicht explizit angegeben ist.

Eine aromatische Gruppe kann monocyclisch, bicyclisch, tricyclisch oder polycyclisch sein. Eine aromatische Gruppe kann ferner auch 1 bis 5 Heteroatome ausgewählt aus der Gruppe bestehend aus **N,** O, und S enthalten. Diese Gruppen werden auch als Heteroarylgruppen bezeichnet (siehe unten). Beispiele für aromatische Gruppen sind Benzol, Naphthalin, Anthracen, Phenanthren, Furan, Pyrrol, Thiophen, Isoxazol, Pyridin und Chinolin, wobei in den vorgenannten Beispielen jeweils die notwendige Anzahl an Wasserstoffatomen entfernt ist, um eine Eingliederung in die entsprechende Strukturformel zu ermöglichen.

Ein "aliphatischer" Rest" ist ein Kohlenwasserstoffrest, der nicht aromatisch ist. Eine "Cycloalkylgruppe" oder ein "cycloaliphatischer Rest" bezeichnet einen mono- oder polycyclischen Kohlenwasserstoffrest, der nicht aromatisch ist. Insbesondere bezeichnet eine Cycloalkylgruppe mit 4 bis 14 C-Atomen einen nicht-aromatischen Kohlenwasserstoffring mit 4 bis 14 Kohlenstoffatomen. Cycloalkylgruppen können gesättigt oder teilweise ungesättigt sein. Gesättigte Cycloalkylgruppen sind nicht aromatisch und weisen auch keine Doppel- oder Dreifachbindungen auf. Teilweise ungesättigte Cycloalkylgruppen weisen im Gegensatz zu gesättigten Cycloalkylgruppen mindestens eine Doppeloder Dreifachbindung auf, wobei die Cycloalkylgruppe jedoch nicht aromatisch ist. Cycloalkylgruppen können insbesondere auch substituiert sein, auch wenn dies nicht speziell angegeben ist.

Eine "Aralkylgruppe" oder "alipatisch-aromatische Gruppe/Rest" bezeichnet eine durch eine Arylgruppe substituierte Alkylgruppe bzw. durch eine Arylgruppe substituierten aliphatischen Rest. Eine "C5- bis C15-Aralkylgruppe" bezeichnet insbesondere eine Aralkylgruppe mit 5 bis 15 Kohlenstoffatomen, wobei darin sowohl die Kohlenstoffatome der Alkylgruppe als auch der Arylgruppe enthalten sind. Beispiele sind Benzyl- und Phenylethyl. Aralkylgruppen können insbesondere auch substituiert sein, auch wenn dies nicht spezielle angegeben ist.

Ein "cyclisches Ringsystem" bezeichnet einen Kohlenwasserstoffring, der nicht aromatisch ist. Insbesondere bezeichnet ein cyclisches Ringsystem mit 4 bis 14 C-Atomen ein nicht-aromatisches Kohlenwasserstoffringsystem mit 4 bis 14 Kohlenstoffatomen. Ein cyclisches Ringsystem kann aus einem einzelnen Kohlenwasserstoffring (monocyclisch), aus zwei Kohlenwasserstoffringen (bicyclisch) oder aus drei Kohlenwasserstoffringen (tricyclisch) bestehen. Insbesondere können cyclische Ringsysteme auch 1 bis 5 Heteroatome, bevorzugt ausgewählt aus der Gruppe bestehend aus N, Si, O, und S enthalten. Alicyclisch ist ein Rest, der aliphatisch und cyclisch ist.

"Gesättigte cyclische Ringsysteme" sind nicht aromatisch und weisen auch keine Doppel- oder Dreifachbindungen auf. Beispiele für gesättigte cyclische Ringsysteme sind Cyclopentan, Cyclohexan, Decalin, Norbornan und 4H-Pyran, wobei in den vorgenannten Beispielen jeweils die notwendige Anzahl an Wasserstoffatomen entfernt ist, um eine Eingliederung in die entsprechende Strukturformel zu ermöglichen. Beispielsweise würden in einer Strukturformel HO-R*-CH₃, wobei R* ein cyclisches Ringsystem mit 6 Kohlenstoffatomen, insbesondere Cyclohexan, ist, zwei Wasserstoffatome von dem cyclischen Ringsystem, insbesondere von Cyclohexan, entfernt sein, um eine Eingliederung in die Strukturformel zu erlauben.

Eine "Heteroaryl"-Gruppe, wie hierin verwendet, bezeichnet einen monocyclischen oder polycyclischen aromatischen Ring, aus insbesondere 5 bis 10 Ringatomen, wobei ein, zwei, drei oder vier Ringatome Stickstoff, Sauerstoff oder Schwefel sind und der Rest Kohlenstoff ist. Heteroarylgruppen können substituiert oder unsubstituiert sein. Wenn sie substituiert sind, sind die Substituenten wie oben für Cycloalkyl definiert.

Ein "heteroalicyclischer Rest" oder eine "Heterocycloalkylgruppe", wie hierin verwendet, bezeichnet einen monocyclischen oder fusionierten Ring aus 5 bis 10 Ringatomen, der ein, zwei oder drei Heteroatome enthält, die aus N, O und S ausgewählt werden, wobei der Rest der Ringatome Kohlenstoff ist. Eine "Heterocycloalkenyl"-Gruppe enthält zusätzlich ein oder mehrere Doppelbindungen. Der Ring hat jedoch kein vollständiges konjugiertes π-Elektronensystem. Wenn sie substituiert sind, sind die Substituenten wie oben für Cycloalkyl definiert.

Sofern nichts anderes angegeben ist, bezeichnet N insbesondere Stickstoff. Ferner bezeichnet O insbesondere Sauerstoff, sofern nichts anderes angegeben ist.

"Optional substituiert" bedeutet, dass in der entsprechenden Gruppe bzw. in dem entsprechenden Rest Wasserstoffatome durch Substituenten ersetzt sein können. Substituenten können insbesondere ausgewählt sein aus der Gruppe bestehend aus C1- bis C4-Alkyl, Methyl-, Ethyl-, Propyl-, Butyl-, Phenyl-, Benzyl-, Halogen-, Fluor-, Chlor-, Brom-, lod-, Hydroxy-, Amino-, Alkylamino-, Dialkylamino-, C1- bis C4-Alkoxy-, Phenoxy-, Benzyloxy-, Cyano-, Nitro-, und Thio-. Wenn eine Gruppe als optional substituiert bezeichnet ist, können 0 bis 50, insbesondere 0 bis 20, Wasserstoffatome der Gruppe durch Substituenten ersetzt sein. Wenn eine Gruppe substituiert ist, ist mindestens ein Wasserstoffatom durch einen Substituenten ersetzt.

"Alkoxy" bezeichnet eine Alkylgruppe, die über ein Sauerstoffatom mit der Hauptkohlenstoffkette verbunden ist.

Der Begriff "Polysiloxan" oder "Polyorganosiloxan" bezeichnet eine Organosilikonverbindung.

Im Sinne der Erfindung handelt es sich bei "Silikonkautschukmassen" um synthetische silikonhaltige Kautschukmassen, die im Rahmen dieser Erfindung auch synonym als (härtbare) Zusammensetzung oder Silikonzusammensetzung bezeichnet werden, was Kautschuk Polymerisate, Polykondensate, und Polyaddukte einschließt, die durch Vernetzung mit geeigneten Vernetzern in den hochelastischen, gehärteten Zustand überführt werden können. Ferner handelt es sich um plastisch formbare Mischungen, beispielsweise aus α,ω-Dihydroxypolyorganosiloxanen und geeigneten Härtern bzw. Vernetzungsmitteln, die unter Feuchtigkeitsausschluß aufbewahrt werden können, wobei diese Silikonkautschukmassen aber unter dem Einfluss von Wasser oder Luftfeuchtigkeit bei Raumtemperatur polymerisieren.

Die Bezeichnung "Katalysator" bezeichnet einen Stoff, der die Aktivierungsenergie einer bestimmten Reaktion herabsetzt und dadurch die Reaktionsgeschwindigkeit erhöht. Unter einem Metallkatalysator wird im Sinne der Erfindung eine Verbindung verstanden, die ein Metall- oder Halbmetall-Atom oder -Ion enthält. Dies kann beispielsweise ein Salz oder eine metallorganische Verbindung sein.

Die "Reißdehnung" ist das Verhältnis der Längenänderung zur Ausgangslänge nach dem Bruch des Prüfkörpers. Sie drückt die Fähigkeit eines Werkstoffes aus, Formänderungen ohne Rissbildung zu widerstehen. Die Reißdehnung wird nach der DIN EN ISO 8339 und DIN 53504 im Zugversuch ermittelt.

Der "Dehnspannungswert" definiert die Spannung, die bei 100% Dehnung des Dichtstoffes auf die Haftflächen bzw. den angrenzenden Baustoff ausgeübt wird.

Der "Sekantenmodul" bezeichnet das Verhältnis von Spannung zur Dehnung an einem beliebigen Punkt der Kurve eines Spannungs-Dehnungsdiagramms. Es ist die Steigung einer Kurve vom Beginn bis zu einem beliebigen Punkt auf der Spannungs-Dehnungskurve.

Das "Rückstellvermögen" beschreibt die Tendenz eines flexiblen Trägers, die ursprünglichen Maße ganz oder teilweise wieder anzunehmen, nachdem die Kräfte aufgehoben wurden, welche die Ausdehnung oder Verformung verursacht haben. Das mittlere Rückstellvermögen wird gemäß der DIN EN ISO 7389 bestimmt.

In einer Ausführungsform betrifft die Erfindung eine Zusammensetzung erhältlich durch Vermischen der Komponenten
(a) Vernetzer oder Vernetzermischung, erhältlich durch Reaktion von

   (HX(CR^{c}₂)ₒY(CR^{c}₂)ₒX(CR^{c}₂)ₒ)₄₋ₚSiKₚ,

   worin
   jedes X unabhängig voneinander steht für O, NR^{b}, S, oder PR^{b},
   jedes R^{b} unabhängig voneinander steht für H, Trialkylsilyl oder einen gesättigten oder ungesättigten, optional substituierten Kohlenwasserstoffrest mit 1 - 16 C-Atomen,
   jedes Y unabhängig voneinander steht für eine C-C-Bindung, CR^{c}₂, O, NR^{e} oder PR^{e}, worin
   jedes R^{c} unabhängig voneinander steht für H oder einen gesättigten oder ungesättigten, optional substituierten Kohlenwasserstoffrest mit 1 - 16 C-Atomen,
   jedes R^{e} unabhängig voneinander steht für H oder einen gesättigten oder ungesättigten, optional substituierten Kohlenwasserstoffrest mit 1 - 16 C-Atomen,
   jedes K unabhängig voneinander steht für Cl, OR^{d} oder ON=CR^{g}₂, jedes R^{d} unabhängig voneinander steht für einen gesättigten oder ungesättigten, optional substituierten Kohlenwasserstoffrest mit 1 - 16 C-Atomen,
   jedes R^{g} unabhängig voneinander steht für H oder einen gesättigten oder ungesättigten, optional substituierten Kohlenwasserstoffrest mit 1 - 16 C-Atomen,
   jedes o unabhängig voneinander eine ganze Zahl von 1 bis 8 ist und
   p = 2 oder 3 ist,
(b) Metallkatalysator und
(c) Aminosilan.

In einer bevorzugten Ausführungsform steht K für Cl, OR^{d} oder ON=CR^{g}₂, insbesondere für OR^{d}. Besonders bevorzugt betrifft die Erfindung daher eine Zusammensetzung erhältlich durch Vermischen der Komponenten
(a) Vernetzer oder Vernetzermischung, erhältlich durch Reaktion von

   (HX(CR^{c}₂)ₒY(CR^{c}₂)ₒX(CR^{c}₂)ₒ)_{4-pS}i(OR^{d})ₚ,

   worin
   X, Y, R^{c}, R^{d} und o wie oben definiert sind, und
   p 2 oder 3 ist,
(b) Metallkatalysator und
(c) Aminosilan.

In der Reaktion von (HX(CR^{c}₂)ₒY(CR^{c}₂)ₒX(CR^{c}₂)ₒ)₄₋ₚSiKₚ, vorzugsweise (HX(CR^{c}₂)ₒY(CR^{c}₂)ₒX(CR^{c}₂)ₒ)₄₋ₚSi(OR^{d})ₚ, werden die Reste K, vorzugsweise OR^{d}, durch X oder Y nucleophil substituiert und so intramolekular chelatartige Verbindungen hergestellt oder Verbindungen, in denen Si-Atome über die Reste HX(CR^{c}₂)ₒY(CR^{c}₂)ₒX(CR^{c}₂)ₒ intermolekular aneinander gebunden werden. Dies führt dazu, dass die Verbindungen nach der Polymerisation und/oder Vernetzung mit zum Beispiel Polyorganosiloxanen (HO-(SiR^{q}R^{r}O)ₛ-H) zu Dichtstoffen überraschenderweise zum größten Teil in der Dichtstoffmatrix verbleiben. Ohne erfindungsgemäß daran gebunden zu sein wird angenommen, dass die Verbindungen teilweise noch an Si-Atome gebunden und somit im Polymer gebunden sind, und/oder aufgrund von Wasserstoffbrückenbindungen wenig flüchtig sind, da sie durch die polaren Bestandteile der Dichtstoffmatrix festgehalten werden. Beides führt zu dem Vorteil einer geringen Emission von unerwünschten Verbindungen.

Die Umsetzungen von (HX(CR^{c}₂)ₒY(CR^{c}₂)ₒX(CR^{c}₂)ₒ)₄₋ₚSiZₚ, vorzugsweise (HX(CR^{c}₂)ₒY(CR^{c}₂)ₒX(CR^{c}₂)ₒ)₄₋ₚSi(OR^{d})ₚ, sind nachfolgend an Beispielen dargestellt, wobei sowohl bevorzugte Reaktionspfade zu monomere Verbindungen gezeigt sind als auch Reaktionspfade zu oligomeren Verbindungen. Beides führt zu dem erwünschten Ergebnis eines emissionsarmen Dichtstoffs.

Im unten gezeigten Reaktions- und Oligomerisationsschema DTC (Teil 1) ist beispielhaft die Umsetzung eines Trimethoxysilan-alkylentriamins gezeigt, bei dem die nucleophile Substitution der Methoxygruppen am Silizium vorzugsweise intramolekular erfolgt. In der Mitte ist die Umsetzung zu DTC gezeigt:

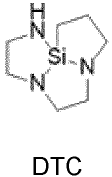

Der linke und rechte Reaktionspfad im Teil 1 des Reaktions- und Oligomerisationsschemas DTC zeigt weitere intra- und intermolekulare Reaktionsmöglichkeiten. Im Teil 2 des Reaktions- und Oligomerisationsschemas DTC sind weitere mögliche Umsetzungen des dimeren Produkts A aus dem Teil des Schemas gezeigt. Auch hier können alle diese Reaktionsprodukte und weitere Umsetzungesprodukte davon als Vernetzer bzw. Vernetzermischung (a) gemäß Patentanspruch 1 fungieren und führen zu den beschriebenen Vorteilen der geringen Emission von Austrittsgruppen der Vernetzer bzw. Vernetzermischung.

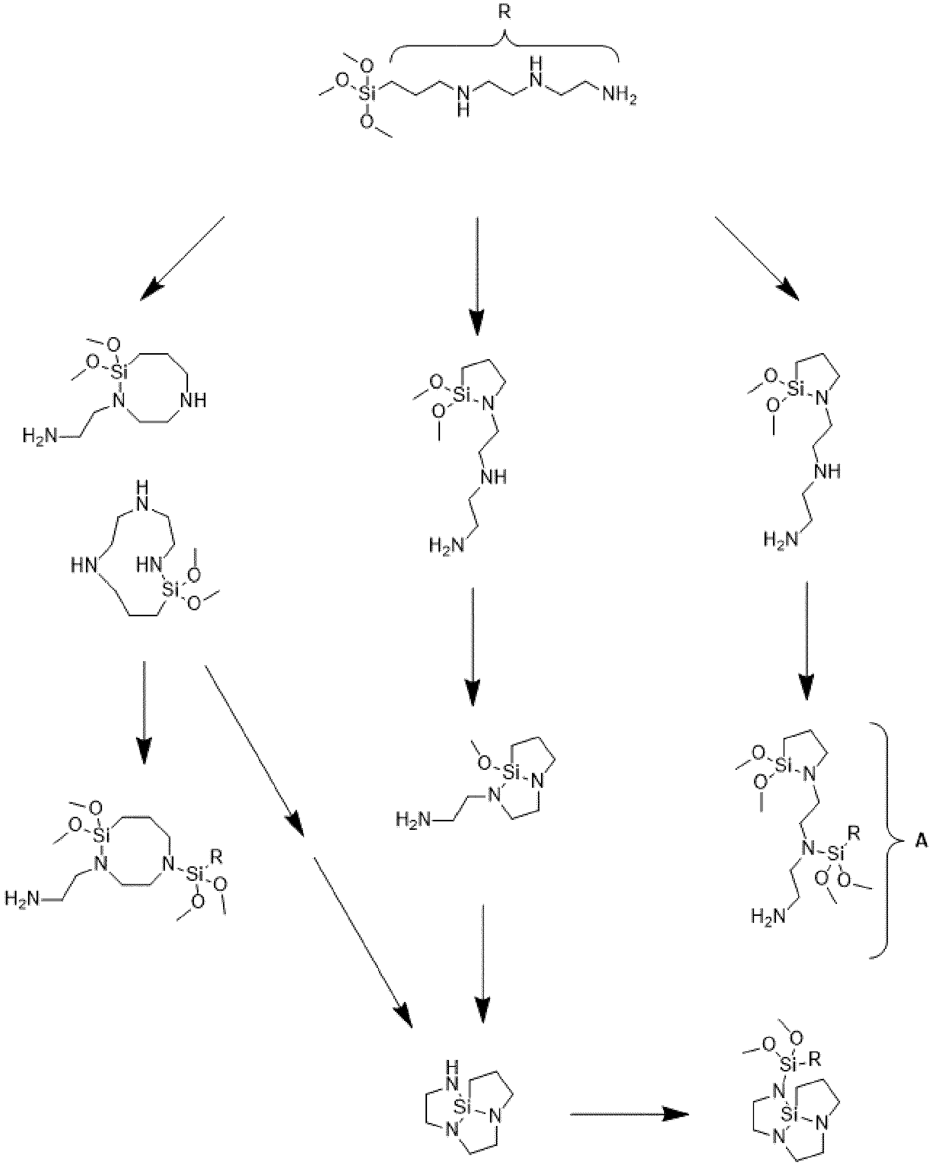

Reaktions- und Oligomerisationsschemata DTC (Teil 1)

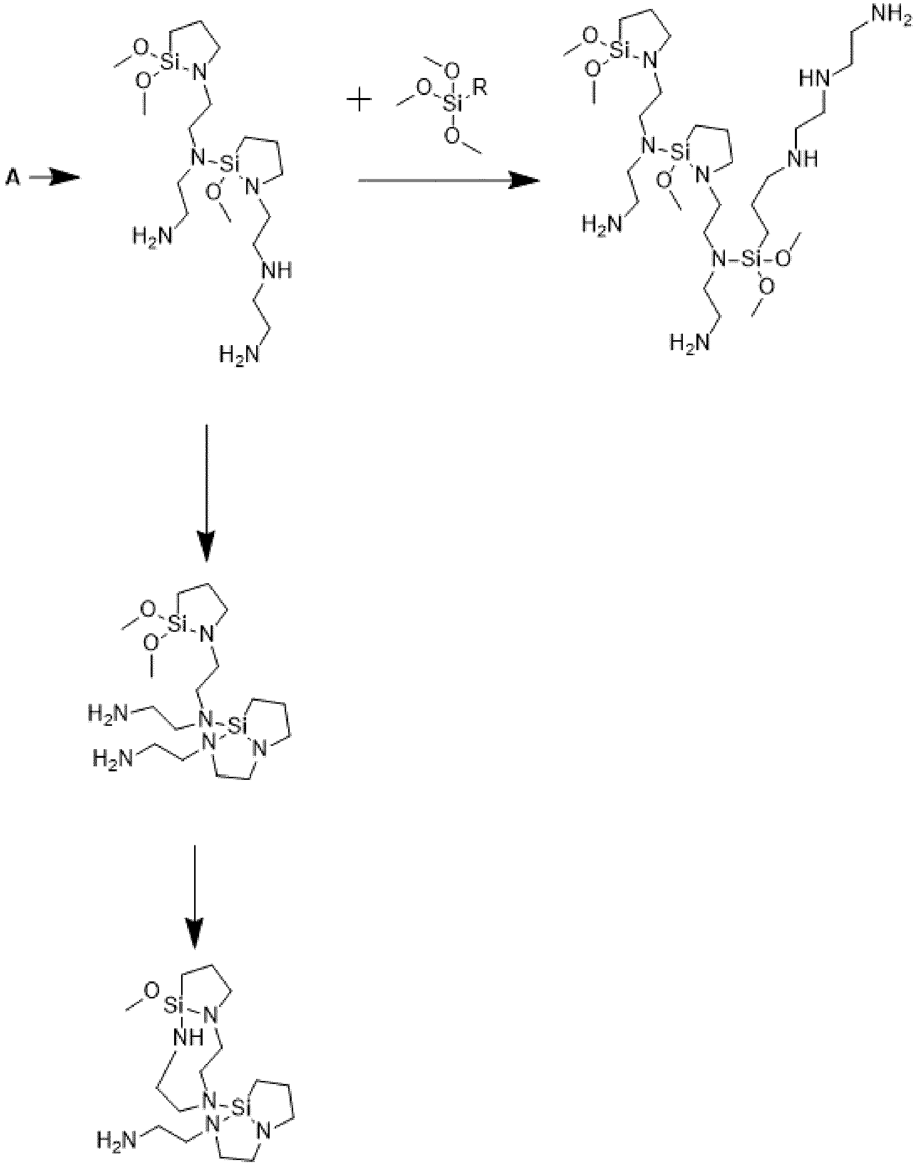

Reaktions- und Oligomerisationsschemata DTC (Teil 2) In den Formeln der Erfindung steht jeder Rest R^{d} unabhängig voneinander für einen gesättigten oder ungesättigten, optional substituierten Kohlenwasserstoffrest mit 1 bis 16 C-Atomen, vorzugsweise 1 - 12 C-Atomen, weiter bevorzugt 1 - 8 C-Atomen, noch weiter bevorzugt 1 - 6 C-Atomen, insbesondere 1 - 4 C-Atomen.

Bevorzugt steht jeder Rest R^{d} unabhängig voneinander für
einen optional substituierten Alkyl-, Alkenyl- oder Alkinylrest,
einen optional substituierten cycloaliphatischen Rest, aromatischen Rest oder aliphatisch-aromatischen Rest, oder
einen optional substituierten heteroalicyclischen Rest oder heteroaromatischen Rest, jeweils mit 1 bis 16 C-Atomen, weiter bevorzugt mit 1 - 12 C-Atomen, noch weiter bevorzugt mit 1 - 8 C-Atomen, weiter bevorzugt mit 1 - 6 C-Atomen, insbesondere 1 - 4 C-Atomen.

In einer besonders bevorzugten Ausführungsform steht jeder Rest R^{d} unabhängig voneinander für Methyl, Ethyl, n-, iso-Propyl, n-, sec-, iso- oder tert-Butyl, Octyl, iso-Octyl, Allyl, Vinyl oder Phenyl. Weiter bevorzugt sind Methyl, Ethyl, n-Propyl, iso-Propyl, iso-Butyl, Octyl, iso-Octyl, Vinyl oder Phenyl. Am meisten bevorzugt steht jeder Rest R^{d} unabhängig voneinander für Methyl oder Ethyl.

Jeder Rest R^{c}, R^{e}und R^{g} steht unabhängig voneinander für H oder einen gesättigten oder ungesättigten, optional substituierten Kohlenwasserstoffrest mit 1 bis 16 C-Atomen, vorzugsweise 1 - 12 C-Atomen, weiter bevorzugt 1 - 8 C-Atomen, noch weiter bevorzugt 1 - 6 C-Atomen, insbesondere 1 - 4 C-Atomen.

Bevorzugt steht jeder Rest R^{c}, R^{e}und R^{g} unabhängig voneinander für
H oder einen optional substituierten Alkyl-, Alkenyl- oder Alkinylrest,
einen optional substituierten cycloaliphatischen Rest, aromatischen Rest oder aliphatisch-aromatischen Rest, oder
einen optional substituierten heteroalicyclischen Rest oder heteroaromatischen Rest,
jeweils mit 1 bis 16 C-Atomen, weiter bevorzugt mit 1 - 12 C-Atomen, noch weiter bevorzugt mit 1 - 8 C-Atomen, weiter bevorzugt mit 1 - 6 C-Atomen, insbesondere 1 - 4 C-Atomen.

In einer besonders bevorzugten Ausführungsform steht jeder Rest R^{c}, R^{e}und R^{g} unabhängig voneinander für **H,** Methyl, Ethyl, n-, iso-Propyl, n-, sec-, iso- oder tert-Butyl, Octyl, iso-Octyl, Allyl, Vinyl oder Phenyl. Weiter bevorzugt sind **H,** Methyl, Ethyl, n-Propyl, iso-Propyl, iso-Butyl, Octyl, iso-Octyl, Vinyl oder Phenyl. Am meisten bevorzugt steht jeder Rest R^{c}, R^{e}und R^{g} unabhängig voneinander für H oder Methyl.

Jeder Rest R^{b} steht unabhängig voneinander für H, Trialkylsilyl oder einen gesättigten oder ungesättigten, optional substituierten Kohlenwasserstoffrest mit 1 bis 16 C-Atomen, vorzugsweise 1 - 12 C-Atomen, weiter bevorzugt 1 - 8 C-Atomen, noch weiter bevorzugt 1 - 6 C-Atomen, insbesondere 1 - 4 C-Atomen.

Bevorzugt steht jeder Rest R^{b} unabhängig voneinander für
H, Trialkylsilyl oder einen optional substituierten Alkyl-, Alkenyl- oder Alkinylrest,
einen optional substituierten cycloaliphatischen Rest, aromatischen Rest oder aliphatisch-aromatischen Rest, oder
einen optional substituierten heteroalicyclischen Rest oder heteroaromatischen Rest,
jeweils mit 1 bis 16 C-Atomen, weiter bevorzugt mit 1 - 12 C-Atomen, noch weiter bevorzugt mit 1 - 8 C-Atomen, weiter bevorzugt mit 1 - 6 C-Atomen, insbesondere 1 - 4 C-Atomen.

In einer besonders bevorzugten Ausführungsform steht jeder Rest R^{b} unabhängig voneinander für H, Trialkylsilyl, Methyl, Ethyl, n-, iso-Propyl, n-, sec-, iso- oder tert-Butyl, Octyl, iso-Octyl, Allyl, Vinyl oder Phenyl. Weiter bevorzugt sind H, Trialkylsilyl, Methyl, Ethyl, n-Propyl, iso-Propyl, iso-Butyl, Octyl, iso-Octyl, Vinyl oder Phenyl.

Die Alkylgruppen in der Trialkylsilylgruppe sind vorzugsweise unabhängig voneinander Methyl, Ethyl, n-, iso-Propyl, n-, sec-, iso- oder tert-Butyl, Octyl, iso-Octyl, Allyl, Vinyl oder Phenyl. Trialkylsilyl ist weiter bevorzugt Trimethylsilyl, Triethylsilyl, Tripropylsilyl oder Tributylsilyl, am meisten bevorzugt sind Trimethylsilyl und Triethylsilyl. Am meisten bevorzugt steht jeder Rest R^{b} unabhängig voneinander für H, Trimethylsilyl oder Methyl.

In den Formeln der vorliegenden Erfindung ist o vorzugsweise 1, 2 oder 3, weiter bevorzugt 2 oder 3, besonders bevorzugt 2. Bevorzugt ist es ferner, dass R^{b} = H, Trialkylsilyl oder CH₃ ist, und/oder R^{c} = H ist und/oder p = 2 oder 3 ist, insbesondere p = 3 ist.

In einer bevorzugten Ausführungsform der Erfindung ist Y = N(CR^{c}₂)ₒX oder P(CR^{c}₂)ₒX, vorzugsweise N(CR^{c}₂)ₒXH, worin R^{c}, o und X wie oben definiert sind, weiter bevorzugt sind darin R^{c} = H, o = 2 oder 3 und/oder X = O oder NH.

In einer bevorzugten Ausführungsform der Erfindung steht (HX(CR^{c}₂)ₒY(CR^{c}₂)ₒX(CR^{c}₂)ₒ)₄₋ₚSiKₚ bzw. (HX(CR^{c}₂)ₒY(CR^{c}₂)ₒX(CR^{c}₂)ₒ)₄₋ₚSi(OR^{d})ₚ für (CH₃O)₃Si(CH₂)₃NH(CH₂)₂NH(CH₂)₂NH₂ , worin R, X, Y, R^{c}, R^{d}, m, o und p wie in der vorliegenden Beschreibung definiert sind.

Die die vorstehend genannten und die nachstehend noch zu erläuternden Merkmale und bevorzugten Ausführungsformen können in beliebigen Kombinationen kombiniert werden, ohne den Rahmen der vorliegenden Erfindung zu verlassen. So betrifft beispielsweise in einer bevorzugten Ausführungsform die Erfindung eine Zusammensetzung erhältlich durch Vermischen der Komponenten
(a) Vernetzer oder Vernetzermischung, erhältlich durch Reaktion von (HX(CR^{c}₂)ₒY(CR^{c}₂)ₒX(CR^{c}₂)ₒ)₄₋ₚSiKₚ, vorzugsweise (HX(CR^{c}₂)ₒY(CR^{c}₂)ₒX(CR^{c}₂)ₒ)₄₋ₚSi(OR^{d})ₚ, worin
   X, Y, K, R^{c}, R^{d} und o wie in der vorliegenden Patentanmeldung definiert sind, und
   p = 2 oder 3 ist,
(b) Metallkatalysator und
(c) Aminosilan.

In einer besonders bevorzugten Ausführungsform der Erfindung ist die Zusammensetzung erhältlich durch Vermischen der oben genannten Komponenten (a) bis (c) und zusätzlich der Komponente
(d) Polyorganosiloxan der Formel HO-(SiR^{q}R^{r}O)ₛ-H, wobei
jedes R^{q} und R^{r} unabhängig voneinander steht für einen gesättigten oder ungesättigten, optional substituierten Kohlenwasserstoffrest mit 1 - 16 C-Atomen und s eine ganze Zahl von 5 bis 5000 ist.

Bevorzugt steht jedes R^{q} und R^{r} unabhängig voneinander für
einen optional substituierten Alkyl-, Alkenyl- oder Alkinylrest;
einen optional substituierten cycloaliphatischen Rest, Arylrest oder Aralkylrest; oder einen optional substituierten heteroalicyclischen Rest oder Heteroarylrest, jeweils mit 1 - 16 C-Atomen.

Mit dem Polyorganosiloxan findet eine Polymerisation und/oder Vernetzung zu einer Silikonzusammensetzung statt.

In einer Ausführungsform betrifft die Erfindung eine Zusammensetzung erhältlich durch Vermischen der Komponenten (a) bis (c). Die Komponente (a) ist erhältlich durch Umsetzung (chemische Reaktion) der Ausgangskomponenten, die unter (a) beschrieben sind. Die Komponenten (a) bis (c) werden in der Regel nach dem Vermischen schon teilweise miteinander reagieren. In einer bevorzugten Ausführungsform der Erfindung enthält die erfindungsgemäße Zusammensetzung die Komponenten (a) bis (c).

Die Komponenten (a), (b) und (c) werden vermischt, wobei (a) das Reaktionsgemisch gemäß (a) ist. Das Reaktionsprodukt (a) kann dabei aufgearbeitet oder gereinigt sein, beispielsweise können Nebenprodukte abgetrennt oder Produkte daraus isoliert sein. In der Regel wird das Reaktionsprodukt (a) ein Gemisch verschiedener Verbindungen sein.

Das idealisierte Produkt des bevorzugten Reaktionspfads der Umsetzung von (HX(CR^{c}₂)ₒY(CR^{c}₂)ₒX(CR^{c}₂)ₒ)₄₋ₚSiKₚ ist eine monomere Verbindung.

In einer bevorzugten Ausführungsform der Erfindung umfasst daher die erfindungsgemäße Zusammensetzung die Komponenten
(a) mindestens einen Vernetzer der Formel (X(CR^{c}₂)ₒZ(CR^{c}₂)ₒZ(CR^{c}₂)ₒ)Si, worin X, Z, R^{c} und o wie vorliegend definiert sind,
(b) mindestens einen Metallkatalysator und
(c) mindestens ein Aminosilan.

In den obigen Formeln sind die beschrieben bevorzugten und besonders bevorzugten Ausführungsformen ebenfalls bevorzugt und besonders bevorzugt.

Beispielsweise steht jedes R^{d} bevorzugt unabhängig voneinander für einen gesättigten oder ungesättigten, optional substituierten Kohlenwasserstoffrest mit 1 bis 12 C-Atomen, weiter bevorzugt 1 - 8 C-Atomen, noch weiter bevorzugt 1 - 6 C-Atomen, insbesondere 1 - 4 C-Atomen.

Weiter bevorzugt steht jeder Rest R^{d} unabhängig voneinander für
einen optional substituierten Alkyl-, Alkenyl- oder Alkinylrest,
einen optional substituierten cycloaliphatischen Rest, aromatischen Rest oder aliphatisch-aromatischen Rest, oder
einen optional substituierten heteroalicyclischen Rest oder heteroaromatischen Rest, jeweils mit 1 bis 16 C-Atomen, weiter bevorzugt mit 1 - 12 C-Atomen, noch weiter bevorzugt mit 1 - 8 C-Atomen, weiter bevorzugt mit 1 - 6 C-Atomen, insbesondere 1 - 4 C-Atomen.

In einer besonders bevorzugten Ausführungsform steht jeder Rest R^{d} unabhängig voneinander für Methyl, Ethyl, n-, iso-Propyl, n-, sec-, iso- oder tert-Butyl, Octyl, iso-Octyl, Allyl, Vinyl oder Phenyl. Weiter bevorzugt sind Methyl, Ethyl, n-Propyl, iso-Propyl, iso-Butyl, Octyl, iso-Octyl, Vinyl oder Phenyl. Am meisten bevorzugt steht jeder Rest R^{d} unabhängig voneinander für Methyl oder Ethyl.

Jeder Rest R^{b} und R^{c} steht unabhängig voneinander für die beschriebenen Gruppen.

In den Formeln der vorliegenden Erfindung ist o vorzugsweise 1, 2 oder 3, weiter bevorzugt 2 oder 3.

Vorzugsweise ist in der erfindungsgemäßen Zusammensetzung der Vernetzer

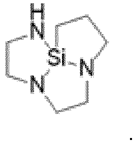

In einer besonders bevorzugten Ausführungsform der Erfindung umfasst die Zusammensetzung neben den oben genannten Komponenten (a) bis (c) zusätzlich der Komponente
(d) Polyorganosiloxan der Formel HO-(SiR^{q}R^{r}O)ₛ-H, wobei
jedes R^{q} und R^{r} unabhängig voneinander steht für einen gesättigten oder ungesättigten, optional substituierten Kohlenwasserstoffrest mit 1 - 16 C-Atomen und s eine ganze Zahl von 5 bis 5000 ist.

Bevorzugt steht jedes R^{q} und R^{r} unabhängig voneinander für
einen optional substituierten Alkyl-, Alkenyl- oder Alkinylrest;
einen optional substituierten cycloaliphatischen Rest, Arylrest oder Aralkylrest; oder einen optional substituierten heteroalicyclischen Rest oder Heteroarylrest, jeweils mit 1 - 16 C-Atomen.

Wie oben beschrieben steht jedes X in den Formeln unabhängig voneinander für O, NR^{b}, S, oder PR^{b}. Bevorzugt steht jedes X unabhängig voneinander für O oder NR^{b}, weiter bevorzugt für O oder NH, insbesondere für O.

In einer weiteren Ausführungsform umfasst die erfindungsgemäße Zusammensetzung einen Vernetzer der Formel Si(R)ₘ(XR^{a})₄₋ₘ, wobei
jedes R und R^{a} unabhängig voneinander steht für
einen gesättigten oder ungesättigten, optional substituierten Kohlenwasserstoffrest mit 1 bis 16 C-Atomen,
m eine ganze Zahl von 0 bis 2 ist;
jedes X unabhängig voneinander für NR^{b} oder O steht, wobei jedes R^{b} unabhängig voneinander steht für
H, Trialkylsilyl oder einen gesättigten oder ungesättigten, optional substituierten Kohlenwasserstoffrest mit 1 bis 16 C-Atomen, wobei
mindestens zwei XR^{a}-Reste kovalent aneinander gebunden sind und zusätzlich kovalent an einen Rest R gebunden.

Unter "mindestens zwei" wird im Sinne der Erfindung insbesondere zwei, drei oder vier verstanden, d.h. es können zwei, drei oder vier Reste XR^{a} aneinander gebunden sein.

Bei den Resten R und/oder XR^{a}, die aneinander kovalent gebunden sind, sind jeweils zwei H-Atome der Reste durch eine kovalente Bindung ersetzt. So wird beispielsweise aus zwei Methylgruppen eine Ethylengruppe oder aus zwei -N(R)CH₃-Gruppen kann eine -N(R)-CH₂-CH₂-N(R)-Gruppe werden. Statt eines Alkylrestes liegt dann durch die kovalente Bindung an einen weiteren Rest ein Alkandiylrest und bei kovalenter Bindung an zwei weitere Reste ein Alkantriylrest vor.

In einer bevorzugten Ausführungsform der Erfindung steht in der Formel Si(R)ₘ(XR^{a})₄₋ₘ jeder Rest R und R^{a}, der nicht kovalent an einen anderen Rest R oder R^{a} gebunden ist, unabhängig voneinander für
einen optional substituierten Alkyl-, Alkenyl- oder Alkinylrest;
einen optional substituierten cycloaliphatischen Rest, aromatischen Rest oder aliphatisch-aromatischen Rest; oder
einen optional substituierten heteroalicyclischen Rest oder heteroaromatischen Rest, jeweils mit 1 bis 16 C-Atomen.
Jeder Rest R^{a} und R, der kovalent an einen anderen Rest R oder R^{a} gebunden ist, steht vorzugsweise unabhängig voneinander für
einen optional substituierten Alkandiyl-, Alkendiyl- oder Alkindiylrest;
einen optional substituierten cycloaliphatischen Rest, aromatischen Rest oder aliphatisch-aromatischen Rest; oder
einen optional substituierten heteroalicyclischen Rest oder heteroaromatischen Rest, jeweils mit 1 bis 16 C-Atomen.
Jeder Rest R^{a} und R, der kovalent an zwei andere Reste R und/oder R^{a} gebunden ist, steht vorzugsweise für unabhängig voneinander für
einen optional substituierten Alkantriyl-, Alkentriyl- oder Alkintriylrest;
einen optional substituierten cycloaliphatischen Rest, aromatischen Rest oder aliphatisch-aromatischen Rest; oder
einen optional substituierten heteroalicyclischen Rest oder heteroaromatischen Rest, jeweils mit 1 bis 16 C-Atomen.

**In** einer bevorzugten Ausführungsform sind die Reste R und R^{a}, die kovalent aneinander gebunden sind, durch Ersetzen von zwei H-Atomen durch eine kovalente Bindung, abgeleitet von den Resten
optional substituierter Alkyl-, Alkenyl- oder Alkinylrest;
optional substituierter cycloaliphatischer Rest, aromatischen Rest oder aliphatisch-aromatischen Rest; oder
optional substituierter heteroalicyclischer Rest oder heteroaromatischer Rest, jeweils mit 1 bis 16 C-Atomen.

Die Reste, die 1 bis 16 C-Atome aufweisen, weisen vorzugsweise 1 - 12 C-Atome, weiter bevorzugt 1 - 8 C-Atome, noch weiter bevorzugt 1 - 6 C-Atome, insbesondere 1 - 4 C-Atome auf. Die Reste, die 1 bis 12 C-Atome aufweisen, weisen vorzugsweise 1 - 8 C-Atome, weiter bevorzugt 1 - 6 C-Atome, insbesondere 1 - 4 C-Atome auf.

In einer besonders bevorzugten Ausführungsform steht jeder Rest R und/oder R^{a} des Vernetzers der Formel Si(R)ₘ(XR^{a})₄₋ₘ, der nicht kovalent an einen anderen Rest gebunden ist, unabhängig voneinander für Methyl, Ethyl, n-, iso-Propyl, n-, sec-, iso- oder tert-Butyl, oder Phenyl. Jeder Rest R und R^{a} des Vernetzers, der kovalent an einen anderen Rest gebunden ist, ist abgeleitet durch Ersetzung von einem H-Atom durch eine kovalente Bindung von den Resten Methyl, Ethyl, n-, sec-, iso- oder tert-Butyl, oder Phenyl.

Wie oben beschrieben steht jedes X unabhängig voneinander für NR^{b}, PR^{b}oder O. Jeder Rest R^{b} steht in obiger Formel unabhängig voneinander für H, Trialkylsilyl oder einen gesättigten oder ungesättigten, optional substituierten Kohlenwasserstoffrest mit 1 bis 16 C-Atomen. R^{b} weist vorzugsweise 1 - 12 C-Atome, weiter bevorzugt 1 - 8 C-Atome, insbesondere 1 - 6 C-Atome auf.

Bevorzugt steht jeder Rest R^{b} in obiger Formel unabhängig voneinander für
H, Trialkylsilyl oder einen optional substituierten Alkyl-, Alkenyl- oder Alkinylrest;
einen optional substituierten cycloaliphatischen Rest, aromatischen Rest oder aliphatisch-aromatischen Rest; oder
einen optional substituierten heteroalicyclischen Rest oder heteroaromatischen Rest, jeweils mit 1 bis 16 C-Atomen, weiter bevorzugt mit 1 - 12 C-Atomen, noch weiter bevorzugt mit 1 - 8 C-Atomen, am meisten bevorzugt mit 1 - 6 C-Atomen.

In einer bevorzugten Ausführungsform steht R^{b} für H, Trialkylsilyl, Methyl, Ethyl, n-, isoPropyl, n-, sec-, iso- oder tert-Butyl, Octyl, iso-Octyl, Allyl, Vinyl oder Phenyl. H, Trialkylsilyl, Methyl, Ethyl, n-Propyl, iso-Propyl, iso-Butyl, Octyl, iso-Octyl, Vinyl und Phenyl sind weiter bevorzugt. Am meisten bevorzugt ist R^{b} = H oder Trimethylsilyl.

In einer bevorzugten Ausführungsform der Erfindung können die mindestens zwei R^{a}-Reste, die kovalent aneinander gebunden sind, über eine C-C-Bindung oder über Heteroatome aneinander gebunden sein. Dies können die Heteroatome X der Reste XR^{a} in der Formel Si(R)ₘ(XR^{a})₄₋ₘ sein oder Heteroatome von Substituenten der Reste. Bevorzugt sind die mindestens zwei R^{a}-Reste über eine C-C-, eine C-N- oder eine C-O-Bindung kovalent aneinander gebunden, besonders bevorzugt über eine C-C-Bindung oder eine C-N-Bindung.

In einer bevorzugten Ausführungsform der Erfindung ist in der Formel Si(R)ₘ(XR^{a})₄₋ₘ des Vernetzers m = 1 oder 2 und die mindestens zwei R^{a}-Reste, die kovalent aneinander gebunden sind, sind zusätzlich kovalent an einen Rest R gebunden. Dies hat den Vorteil, dass die Gruppe nicht flüchtig ist, sondern an das Polymer gebunden bleibt und so keine aus der Austrittsgruppe resultierende Verbindung aus der erhältlichen Silikonkautschukmasse emittiert wird.

In noch einer weiteren bevorzugten Ausführungsform ist in der Formel Si(R)ₘ(XR^{a})₄₋ₘ m = 1 und drei R^{a}-Reste sind kovalent aneinander gebunden. So entsteht eine höhermolekulare Austrittsgruppe mit mehreren HXR^{a}-Gruppen, die kaum emittiert wird. Weiter bevorzugt ist es, dass die drei R^{a}-Reste, die kovalent aneinander gebunden sind, zusätzlich kovalent an den Rest R gebunden sind. Das hat den bereits oben beschriebenen Vorteil, dass die Austrittsgruppe an das Polymer gebunden bleibt und so nicht flüchtig ist.

In noch einer weiteren bevorzugten Ausführungsform ist in der Formel Si(R)ₘ(XR^{a})₄₋ₘ m = 1, drei R^{a}-Reste sind kovalent aneinander gebunden und an den Rest R gebunden. Auch bevorzugt ist es, dass in der Formel Si(R)ₘ(XR^{a})₄₋ₘ m = 2 ist, zwei R^{a}-Reste kovalent aneinander gebunden und an einen Rest R gebunden sind.

In einer weiteren besonders bevorzugten Ausführungsform werden Mischungen der beschriebenen Vernetzer für die erfindungsgemäßen Zusammensetzungen verwendet.

In einer besonders bevorzugten Ausführungsform der Erfindung steht R für eine optional substituierte, geradkettige oder verzweigte C1- bis C12-Alkylgruppe, insbesondere eine optional substituierte, geradkettige oder verzweigte C1- bis C8-Alkylgruppe, eine optional substituierte, geradkettige oder verzweigte C2- bis C12-Alkenylgruppe, insbesondere einer optional substituierte, geradkettige oder verzweigte C2- bis C8-Alkenylgruppe, eine optional substituierte C4- bis C10-Arylgruppe oder eine optional substituierte C5- bis C15-Aralkylgruppe. In einer besonders bevorzugten Ausführungsform steht R für Reste, ausgewählt aus der Gruppe bestehend aus Methyl, Ethyl, n- und isoPropyl, und n-, sec-, iso- und tert-Butyl, Vinyl und Phenyl- oder einem Allylrest. Am meisten bevorzugt ist R Methyl oder Ethyl.

R^{c} steht besonders bevorzugt für H oder eine optional substituierte, geradkettige oder verzweigte C1- bis C12-Alkylgruppe, insbesondere eine optional substituierte, geradkettige oder verzweigte C1- bis C8-Alkylgruppe, eine optional substituierte, geradkettige oder verzweigte C2- bis C12-Alkenylgruppe, insbesondere einer optional substituierte, geradkettige oder verzweigte C2- bis C8-Alkenylgruppe, eine optional substituierte C4-bis C10-Arylgruppe oder eine optional substituierte C5- bis C15-Aralkylgruppe. In einer besonders bevorzugten Ausführungsform steht R^{c} für einen Rest, ausgewählt aus der Gruppe bestehend aus H, Methyl, Ethyl, n- und iso-Propyl, und n-, sec-, iso- und tert-Butyl, Vinyl, Allyl und Phenyl. Am meisten bevorzugt ist R^{c} = H, Methyl oder Ethyl.

In einer bevorzugten Ausführungsform der Erfindung ist der Vernetzer eine Verbindung der Formel

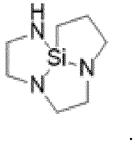

Die erfindungsgemäße Zusammensetzung weist vorzugsweise nach dem Aushärten weniger als 1 Gew.-% Masseverlust auf, bezogen auf das Gesamtgewicht der Zusammensetzung, insbesondere weniger als 0,75 Gew.-%, noch weiter bevorzugt weniger als 0,5 Gew.-%, bezogen auf das Gesamtgewicht der Zusammensetzung (Masseverlust gemessen nach DIN EN ISO 10563).

Die erfindungsgemäße Zusammensetzung umfasst ferner einen Metallkatalysator. Der Metallkatalysator katalysiert das Aushärten der Zusammensetzung, indem das Vernetzen von OH-Gruppen tragenden Polyorganosiloxanen (Silikonen) mit dem Vernetzer in Gegenwart von Wasser oder Luftfeuchtigkeit katalysiert wird. Nach dem Aushärten wird eine erfindungsgemäße Silikonkautschukmasse erhalten. Der Metallkatalysator ist vorzugsweise eine Verbindung, die ein Metall oder ein Halbmetall und einen organischen Rest enthält. Weiter bevorzugt ist der Metallkatalysator eine metallorganische Verbindung.

Das Metall des Metallkatalysators ist vorzugsweise ausgewählt aus der Gruppe bestehend aus s- und p-Block-Metallen, d- und f-Block-Übergangsmetallen, Lanthanid- und Actinid-Metallen und -Halbmetallen, insbesondere aus der Gruppe bestehend aus Metallen der ersten, zweiten, dritten, vierten, fünften, achten, zehnten und elften Nebengruppe und Metallen der ersten, zweiten, dritten, vierten und fünften Hauptgruppe. Weiter bevorzugt ist das Metall des Metallkatalysators ausgewählt aus der Gruppe bestehend aus Na, Zn, Sc, Nd, Ti, Zr, Hf, V, Fe, Pt, Cu, Ga, Ca, Sn und Bi, bevorzugt ausgewählt ist aus der Gruppe bestehend aus Ti, Zr, Zn, Ca, Sn und Bi.

In einer weiteren bevorzugten Ausführungsform enthält der Metallkatalysator Zinn. Besonders bevorzugte Katalysatoren sind Dialkylzinn(II)-salze wie Dialkylzinn(II)-carboxylate, z.B. Dibutylzinn-dilaurat.

In einer anderen bevorzugten Ausführungsform enthält der Metallkatalysator kein Zinn. Solche zinnfreien Katalysatoren haben den Vorteil, dass toxisches Zinn, insbesondere aus zinnorganischen Verbindungen vermieden wird. Daher ist das Metall des Metallkatalysators dann bevorzugt ausgewählt aus der Gruppe bestehend aus Na, Zn, Sc, Nd, Ti, Zr, Hf, V, Fe, Pt, Cu, Ga, Ca, und Bi, bevorzugt ausgewählt ist aus der Gruppe bestehend aus Ti, Zr, Zn, Ca, und Bi.

In einer bevorzugten Ausführungsform der Erfindung umfasst die Zusammensetzung als Metallkatalysator eine Metall-Siloxan-Silanol(-at)-Verbindung (= **M**etall-**S**iloxan-**S**ilanol/**S**ilanolat-Verbindung) auch als "M3S"-Verbindung bezeichnet. Diese M3S-Verbindungen sind in der EP 3 392 313 A1 beschrieben und können als Katalysatoren mit Vorteil in den Zusammensetzungen der vorliegenden Erfindung mit Vorteil eingesetzt werden.

In einer bevorzugten Ausführungsform der Erfindung umfasst die Zusammensetzung als Metallkatalysator ein Metallsiloxan, insbesondere ein Metallsiloxan der Formel R*_{A}S _{B}O_{C}M_{D}, wobei
jedes R* unabhängig voneinander ausgewählt ist aus der Gruppe bestehend aus optional substituiertem C1- bis C20-Alkyl, optional substituiertem C3- bis C6-Cycloalkyl, optional substituiertem C2- bis C20-Alkenyl, optional substituiertem C6- bis C10-Aryl, - OH und -O-(C1- bis C20-Alkyl), worin
M das Metall ist,
A eine ganze Zahl von 4 bis 19 ist,
B eine ganze Zahl von 4 bis 10 ist,
C eine ganze Zahl von 8 bis 30 ist, und
D eine ganze Zahl von 1 bis 8 ist.

Das Metallsiloxan ist vorzugsweise ein Metallsilsesquioxan, insbesondere ein polyhedrales Metallsilsesquioxan. Unter einem polyhedralen Metallsilsesquioxan wird ein Metallsilsesquioxan verstanden, bei dem Silizium- und Metallatome zumindest teilweise die Ecken eines Polyeders besetzen, beispielsweise eines Würfels.

Besonders bevorzugt ist das Metallsilsesquioxan ein polyhedrales Titan- und/oderZirkoniumsilsesquioxan. Ein Beispiel ist nachfolgend wiedergegeben:

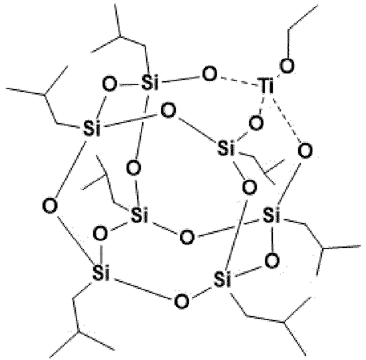

Ferner enthält die erfindungsgemäße Zusammensetzung, als Komponente (c), ein Aminosilan, das in der Zusammensetzung unter anderem als Haftvermittler fungieren kann.

Unter einem Aminosilan wird eine organische Verbindung verstanden, die ein Silziumatom und eine Aminogruppe enthält. Die Aminogruppe kann optional substituiert sein. Die Aminogruppe kann insbesondere eine primäre, sekundäre oder tertiäre Aminogruppe sein.

In einer bevorzugten Ausführungsform der erfindungsgemäßen Zusammensetzung ist das Aminosilan
(a) eine Verbindung der Formel (X)₃Si-R^{E}-N(R^{F})R^{G,}
   wobei jedes X unabhängig voneinander ausgewählt ist aus der Gruppe bestehend aus -OMe, -OEt, -OⁱPr, -OⁿPr, -OⁿBu, -O^{sec}Bu, -O^{iso}Bu, -O^{t}Bu und -OPh R^{E} -(CH₂)ₛ- bedeutet, wobei s eine ganze Zahl von 1 bis 10 ist,
   R^{F} H, eine optional substituierte C1- bis C16-Alkylgruppe oder R^{I} bedeutet,
   R^{G} eine optional substituierte C1- bis C16-Alkylgruppe, R^{I} oder -C(O)-R^{H} bedeutet,
   wobei R^{F} nur dann H bedeutet, wenn R^{G}-C(O)-R^{H} bedeutet, und
   wobei R^{H} eine optional substituierte, geradkettige oder verzweigte C1- bis C16-Alkoxygruppe, -O-R^{I}, eine optional substituierte, geradkettige oder verzweigte C1- bis C16-Alkylgruppe, R^{I} oder -CHMe-O-C(O)-Me bedeutet,
   oder wobei R^{F} und R^{G} zusammen mit dem Atom, an das sie gebunden sind, ein optional substituiertes, heterocyclisches Ringsystem mit 3 bis 14 C-Atomen und 1 bis 5 Heteroatomen, ausgewählt aus der Gruppe bestehend aus N und O bilden, und
   jedes R^{I} unabhängig voneinander ein optional substituiertes cyclisches Ringsystem mit 4 bis 14 C-Atomen oder eine optional substituierte aromatische Gruppe mit 4 bis 14 C-Atomen bedeutet,
   oder Oligomere oder Polymere davon,
   oder
(b) ein heterocyclisches Aminosilan ist, wobei ein Siliziumatom und ein Stickstoffatom direkt miteinander verknüpft sind.

In einer besonders bevorzugten Ausführungsform ist das Aminosilan ausgewählt aus der Gruppe bestehend aus 3-Aminopropyltriethoxysilan, 3-Aminopropyltrimethoxysilan, Aminoethylaminopropyltrimethoxysilan, Butylaminopropyltriethoxysilan, Butylaminopropyltrimethoxysilan, Propylaminopropyltriethoxysilan, Propylaminopropyltrimethoxysilan, N-Cyclohexyl-3-aminopropyltrimethoxysilan, N-Cyclohexyl-3-aminopropyltriethoxysilan, Diethylaminopropyltrimethoxysilan, Dipropylaminopropyltrimethoxysilan, Dibutylaminopropyltrimethoxysilan, Trimethoxypropylsilylacetoxypropionsäureamid, N, N'-Bis(trimethoxysilylpropyl)harnstoff, N,N'-Bis(triethoxysilylpropyl)harnstoff, Tris(triethoxysilylpropyl)diethylentriharnstoff, Dimethylaminopropyltrimethoxysilan, 1,3,5-Tris(trimethoxysilylpropyl)-isocyanurat, N-Methyl(3-Trimethoxysilyl)-propyl)-carbamat, N-Ethyl(3-Triethoxysilyl)-propyl)-carbamat, N-(2-Aminoethyl)-3-aminopropyltrimethoxysilan und Mischungen davon.

In einer weiteren bevorzugten Ausführungsform der Erfindung enthält die Zusammensetzung als Aminosilan ein heterocyclisches Aminosilan, wobei ein Siliziumatom und ein Stickstoffatom direkt miteinander verknüpft sind.

Das heterocyclische Aminosilan kann vorzugsweise ein heterocyclisches Organosilan sein, wie in der EP 3 613 803 A1 beschrieben, worin das Heteroatom vorzugsweise ein Stickstoffatom ist.

In einer besonders bevorzugten Ausführungsform ist das heterocyclische Aminosilan eine Verbindung der Formel 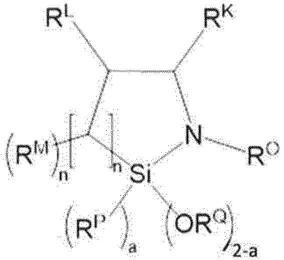 wobei
a 0,1 oder 2 ist;
n = 0 - 6 ist;
jedes R^{K}, R^{L}, R^{M}, R^{O}, R^{P} und R^{Q} unabhängig voneinander H oder eine optional substituierte, geradkettige oder verzweigte C1- bis C20-Alkylgruppe, eine optional substituierte, geradkettige oder verzweigte C2- bis C20 Alkenylgruppe, eine optional substituierte C3- bis C20 Cycloalkylgruppe, eine optional substituierte C4- bis C20 Cycloalkenylgruppe, eine optional substituierte, geradkettige, verzweigte oder cyclische C4- bis C20 Alkinylgruppe oder eine optional substituierte, geradkettige oder verzweigte C2-bis C20 Heteroalkylgruppe, eine optional substituierte, geradkettige, verzweigte oder cyclische C3- bis C20 Heteroalkenylgruppe oder eine optional substituierte C4- bis C14-Aryl- oder Heteroarylgruppe bedeutet oder zwei Reste R^{K}, R^{L}, R^{M}, R^{O}, R^{P} und R^{Q} zusammen einen 5- bis 8-gliedrigen Ring ausbilden.

Der Parameter a in (R^{P})ₐ und (OR^{Q})₂₋ₐ gibt ein Verhältnis von Alkoxyresten OR^{Q} zu Resten R^{P} wieder, die wie hierin definiert sind. Dabei kann a Werte von 0 bis 2 annehmen. Ist a = 0 enthält das zugehörige heterocyclische Organosilan keinen Rest R^{P} und zwei OR^{Q} Reste. Der Parameter a kann auch 1 sein. In diesem Fall ist ein R^{P} Rest und ein OR^{Q} Rest direkt an das Siliziumatom des heterocyclischen Organosilans gebunden. Bei a = 2 sind wiederum ausschließlich R^{P} Reste und keine OR^{Q} Reste mit dem Siliziumatom verknüpft.

Die Reste (R^{M})ₙ in der Formel (III) stehen jeweils in direktem Zusammenhang mit der Ringgröße, die durch den Parameter n bestimmt wird. Die mögliche Anzahl der Reste an den Ringatomen wird hier auch durch den Wert n angepasst. Liegt beispielsweise ein 6 Ring vor ist n = 2 und die Anzahl der Reste R^{c} oder R^{c} wird entsprechend auf 2 angepasst. So kann jedes Ringatom einen Rest tragen.

Das heterocyclische Aminosilan kann an jedem Ringatom unterschiedliche Reste tragen, jedes R^{K}, R^{L}, R^{M}, R^{O}, R^{P} und R^{Q} aus der Formel (III) ist dabei unabhängig voneinander H oder eine optional substituierte, geradkettige oder verzweigte C1- bis C20-Alkylgruppe, eine optional substituierte, geradkettige oder verzweigte C2- bis C20 Alkenylgruppe, eine optional substituierte C3- bis C20 Cycloalkylgruppe, eine optional substituierte C4- bis C20 Cycloalkenylgruppe, eine optional substituierte, geradkettige, verzweigte oder cyclische C4- bis C20 Alkinylgruppe oder eine optional substituierte, geradkettige oder verzweigte C2- bis C20 Heteroalkylgruppe, eine optional substituierte, geradkettige, verzweigte oder cyclische C3- bis C20 Heteroalkenylgruppe oder eine optional substituierte C4- bis C14-Aryl- oder Heteroarylgruppe. Bevorzugt bedeutet jedes R^{K}, R^{L}, R^{M}, R^{O}, R^{P} und R^{Q} dabei unabhängig voneinander H, oder eine optional substituierte geradkettige oder verzweigte C1- bis C10 Alkylgruppe, eine optional substituierte geradkettige oder verzweigte C2- bis C10 Alkenylgruppe, eine optional substituierte, geradkettige oder verzweigte C2- bis C10 Heteroalkylgruppe, eine optional substituierte C3- bis C10-Cycloalkylgruppe, oder einer optional substituierte C4- bis C8-Aryl- oder Heteroarylgruppe. Besonders bevorzugt ist jedes R^{K}, R^{L}, R^{M}, R^{O}, R^{P} und R^{Q} unabhängig voneinander H, eine optional substituierte geradkettige oder verzweigte C1- bis C8 Alkylgruppe, eine optional substituierte geradkettige oder verzweigte C2- bis C8 Alkenylgruppe, eine optional substituierte, geradkettige oder verzweigte C4- bis C8 Heteroalkylgruppe, eine optional substituierte C4 bis C6 Cycloalkylgruppe oder eine optional substituierte C5- bis C6 Aryl- oder Heteroarylgruppe.

Besonders bevorzugte heterocyclische Aminosilane sind substituiertes oder unsubstituiertes, insbesondere unsubstituiertes N-n-Butyl-1-aza-2,2-dimethoxy-2-silacyclopentan ((BDC), CAS-Nr. 618914-44-6), 2,2-Diethoxy-1-(3-triethoxysilylpropyl)aza-2-silacyclopentan ((TESPDC), CAS-Nr. 1184179-50-7) und/oder 2,2-Diethoxy-1-(trimethylsilyl)aza-2-silacyclopentan ((TMS)DEC), CAS-Nr. 21297-72-3), BnDC nachfolgender Struktur (CAS-Nr: 2411737-55-6):

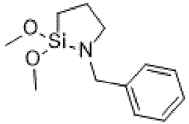

In einer bevorzugten Ausführungsform enthält die erfindungsgemäße Zusammensetzung ein Aminosilan in einer Menge, bezogen auf das Gesamtgewicht der Zusammensetzung von 0,1 - 3 Gew.-%, bevorzugt 0,2 - 2 Gew.-%, besonders bevorzugt 0,3 - 1,5 Gew.-%.

Die erfindungsgemäße Zusammensetzung umfasst vorzugsweise zusätzlich ein Polyorganosiloxan der Formel HO-(SiR^{q}R^{r}O)ₛ-H, worin
jedes R^{q} und R^{r} unabhängig voneinander steht für
einen optional substituierten Alkyl-, Alkenyl- oder Alkinylrest;
einen optional substituierten cycloaliphatischen Rest, Arylrest oder Aralkylrest; oder einen optional substituierten heteroalicyclischen Rest oder Heteroarylrest;
und s eine ganze Zahl von 5 bis 5000 ist.

Wenn die erfindungsgemäße Zusammensetzung ein Polyorganosiloxan der Formel HO-(SiR^{q}R^{r}O)ₛ-H enthält, liegt eine RTV-1-Silikonkautschukmasse vor, die in Gegenwart von Wasser aushärten kann. Enthält die erfindungsgemäße Zusammensetzung kein Polyorganosiloxan, liegt eine RTV-2-Zusammensetzung vor, der vor dem Aushärten ein Polyorganosiloxan zugesetzt werden muss.

Ein in der Zusammensetzung enthaltenes Polyorganosiloxan ist ein α,ω-dihydroxyl-terminiertes Polyorganosiloxan. Neben homopolymeren α,ω-dihydroxyl-terminierten Polydiorganosiloxanen können auch heteropolymere α,ω-dihydroxyl-terminierte Polydiorganosiloxane mit unterschiedlichen organischen Substituenten verwendet werden, wobei sowohl Copolymere aus Monomeren mit gleichartigen organischen Substituenten an einem Siliziumatom, als auch Copolymere aus Monomeren mit verschiedenen organischen Substituenten an einem Siliziumatom umfasst sind, z.B. solche mit gemischten Alkyl-, Alkenyl- und/oder Arylsubstituenten. Die bevorzugten organischen Substituenten umfassen geradkettige und verzweigte Alkylgruppen mit 1 bis 8 Kohlenstoffatomen, insbesondere Methyl, Ethyl, n- und iso-Propyl, und n-, sec- und tert-Butyl, Vinyl und Phenyl. Dabei können in den einzelnen organischen Substituenten einzelne oder alle kohlenstoffgebundenen Wasserstoffatome durch übliche Substituenten, wie Halogenatome oder funktionelle Gruppen wie Hydroxyl- und/oder Aminogruppen, substituiert sein. So können α,ω-dihydroxyl-terminierte Polydiorganosiloxane mit teilfluorierten oder perfluorierten organischen Substituenten verwendet werden oder es werden α,ω-dihydroxyl-terminierte Polydiorganosiloxane mit durch hydroxyl- und/oder aminogruppensubstituierten organischen Substituenten an den Siliziumatomen, verwendet.

Bevorzugte Beispiele für eine Organosilikonverbindung sind α,ω-dihydroxyl-terminierte Polydialkylsiloxane, wie z.B. α,ω-dihydroxyl-terminierte Polydimethylsiloxane, α,ω-dihydroxyl-terminierte Polydiethylsiloxane oder α,ω-dihydroxyl-terminierte Polydivinylsiloxane, sowie α,ω-dihydroxyl-terminierte Polydiarylsiloxane, wie z.B. α,ω-dihydroxyl-terminierte Polydiphenylsiloxane.

In einer bevorzugten Ausführungsform steht jedes R^{q} und R^{r} unabhängig voneinander für eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe.

In einer weiteren bevorzugten Ausführungsform ist in dem Polyorganosiloxan HO-(SiR^{q}R^{r}O)ₛ-H s eine ganze Zahl von 5 bis 3500, weiter bevorzugt 10 bis 3500, noch weiter bevorzugt von 100 bis 3000, insbesondere von 800 bis 2000, am meisten bevorzugt von 1000 bis 1800, ist.

In einer weiteren Ausführungsform hat das Polyorganosiloxan HO-(SiR^{q}R^{r}O)ₛ-H ein gewichtsmittleres Molekulargewicht M_{w} von 400 bis 5.000.000, insbesondere von 3.000 bis 2.500.000, von 15.000 bis 1.000.000, von 30.000 bis 750.000, von 50.000 bis 500.000 oder von 110.000 bis 150.000.

In einer bevorzugten Ausführungsform weist das ein Polyorganosiloxan HO-(SiR^{q}R^{r}O)ₛ-H bei 25°C eine kinematische Viskosität von 20 bis 350000 cSt oder von 20000 bis 100000 cSt oder von 20000 bis 90000 cSt oder von 20000 bis 80000 cSt auf.

In einer besonders bevorzugten Ausführungsform enthält die erfindungsgemäße Zusammensetzung ein Polyorganosiloxan HO-(SiR^{q}R^{r}O)ₛ-H, wobei R^{l} und R^{rn} unabhängig voneinander ausgewählt sind aus der Gruppe bestehend aus Methyl-, Ethyl-, Propyl-, Butyl-, Trifluormethyl-, Vinyl-, Allyl-, Butenyl-, Phenyl- und Naphthyl-.

In einer besonders bevorzugten Ausführungsform enthält die erfindungsgemäße Zusammensetzung ein Polyorganosiloxan HO-(SiR^{q}R^{r}O)ₛ-H, wobei das Polyorganosiloxan α,ω-Dihydroxy-dimethyl-polysiloxan ist.

Das Gewichtsverhältnis des Polyorganosiloxans, insbesondere des α, ω-dihydroxyl-terminierten Polydialkylsiloxans, zum Vernetzer beträgt vorzugsweise 100:1 - 2:1, besonders bevorzugt 50:1 bis 5:1, insbesondere 15:1 - 6:1.

Die erfindungsgemäße Zusammensetzung kann die Verbindung mit der Formel HO-(SiR^{q}R^{r}O)ₛ-H und den Vernetzer jeweils unabhängig voneinander in Form eines Prepolymers enthalten. Bei dem Prepolymer handelt es sich um ein Umsetzungsprodukt der beiden Bestandteile. Diese Umsetzungen sind bekannt und werden auch als Endcapping bezeichnet, wie beispielsweise in der WO 2016/146648 A1 beschrieben.

Die erfindungsgemäße Zusammensetzung kann über die beschriebenen Komponenten hinaus optional weitere Bestandteile/Komponenten enthalten, insbesondere übliche Additive wie Füllstoffe, Weichmacher, Reaktivverdünner, Farbmittel, Thixotropiermittel, rheologische Additive, Benetzungsmittel, UV-Stabilisatoren, Antioxidantien, Trockenmittel etc. Bevorzugt enthalten die Zusammensetzungen erfindungsgemäß mindestens einen weiteren Bestandteil.

Die erfindungsgemäße Zusammensetzung kann ferner vorzugsweise Weichmacher enthalten. Bevorzugt als Weichmacher sind endgruppengecappte Polyethylenglykole, z.B. Polyethylen- oder Polypropylenglykoldialkylether, wobei der Alkylrest ein bis vier C-Atome beträgt, insbesondere Dimethyl- und Diethylether von Diethylenglykol und Dipropylenglykol. Bevorzugt als Weichmacher sind auch Diurethane, welche sich beispielsweise durch Umsetzung von Diolen mit OH-Endgruppen mit monofunktionellen Isocyanaten herstellen lassen. In einer bevorzugten Ausführungsform der Erfindung werden Polyalkylsiloxane, besonders bevorzugt Polydimethylsiloxan als Weichmacher eingesetzt.

Die Zusammensetzungen enthalten Weichmacher vorzugsweise in einer Menge von 2 bis 50 Gew.-%, bevorzugt in einer Menge von 10 bis 40 Gew.-%, besonders bevorzugt in einer Menge von 20 bis 35 Gew.-%, jeweils bezogen auf das Gesamtgewicht der Zusammensetzung. Wird ein Gemisch mehrerer Weichmacher eingesetzt, beziehen sich die Mengenangaben auf die Gesamtmenge an Weichmacher in der Zusammensetzung.

Es können auch Reaktivverdünner zugesetzt werden, wenn die Viskosität der Zusammensetzung weiter herabgesetzt werden soll. Als Reaktivverdünner geeignet sind Verbindungen, die mit der Zusammensetzung mischbar sind und über mindestens eine mit dem Polymer reaktive Gruppe verfügen. Vorzugsweise weist der Reaktivverdünner mindestens eine funktionelle Gruppe auf, die mit Feuchtigkeit oder Luftsauerstoff reagiert. Beispiele sind Isocyanatgruppen, Silylgruppen oder ungesättigte Gruppen wie Vinylgruppen. Zur Herstellung bevorzugter Reaktivverdünner können zum Beispiel entsprechende Polyolkomponenten mit einem mindestens difunktionellen Isocyanat umgesetzt werden.

Die erfindungsgemäße Zusammensetzung kann ferner Füllstoffe enthalten. Hier eignen sich beispielsweise Kreide, Kalkmehl, gefällte und/oder pyrogene Kieselsäure, Zeolithe, Bentonite, Magnesiumcarbonat, Tonerde, Talg, Titanoxid, Eisenoxid, Zinkoxid, Quarz, Sand, Glimmer und andere pulverförmige bzw. gemahlene Mineralstoffe. Weiterhin können auch organische Füllstoffe eingesetzt werden, insbesondere Holzfasern, Holzmehl, Sägespäne, Zellstoff, Baumwolle und Häcksel.

In einer besonders bevorzugten Ausführungsform der Erfindung wird der Zusammensetzung Kieselsäure als Füllstoff zugesetzt, in unbehandelter und/oder behandelter, bevorzugt hydrophobierter Form, besonders bevorzugt pyrogenes Siliziumdioxid, auch als pyrogene Kieselsäure bezeichnet. In einer besonders bevorzugten Ausführungsform der Erfindung wird der Zusammensetzung eine Mischung aus unbehandelter und hydrophobierter Kieselsäure als Füllstoff zugesetzt.

Die Füllstoffe werden vorzugsweise in einer Menge von 1 bis 60 Gew.-%, besonders bevorzugt 2 bis 20 Gew.-%, und ganz besonders bevorzugt 5 bis 15 Gew.-%, jeweils bezogen auf das Gesamtgewicht der Zusammensetzung eingesetzt. Es können auch Gemische mehrerer Füllstoffe eingesetzt werden. In diesem Fall beziehen sich die Mengenangaben auf die Gesamtmenge an Füllstoff in der Zusammensetzung.

Für manche Anwendungen sind Additive oder Füllstoffe bevorzugt, die der Zusammensetzung Thixotropie verleihen. Solche Füllstoffe werden auch als rheologische Hilfsmittel beschrieben, z. B. hydrogenisiertes Rizinusöl, Fettsäureamide oder quellbare Kunststoffe.

Die erfindungsgemäße Zusammensetzung kann über das Aminosilan hinaus zusätzliche Haftvermittler enthalten. Als Haftvermittler geeignet sind hier beispielsweise Harze, z.B. aliphatische oder petrochemische Harze und modifizierte Phenolharze sowie Terpenoligomere. Solche Harze finden beispielsweise als Haftvermittler für Haftklebstoffe und Beschichtungsmaterialien Verwendung. Ebenfalls geeignet sind die Terpen-Phenol-Harze.

Vorzugsweise enthält die Zusammensetzung mindestens einen Stabilisator. Dabei können als Stabilisatoren alle Stabilisatoren eingesetzt werden, die auch bisher zur Zubereitung ähnlicher Zusammensetzungen eingesetzt worden sind. Beispiele für Stabilisatoren sind Phosphorverbindungen in allen Oxidationsstufen. Besonders bevorzugt handelt es sich bei dem Stabilisator um Phosphorverbindungen, wie Phosphorsäuremonoester, Phosphorsäurediester oder Phosphonsäuren, besonders bevorzugt ist Octylphosphonsäure.

Die erfindungsgemäße Zusammensetzung kann zudem durch Trockenmittel gegenüber eindringender Feuchtigkeit stabilisiert werden, um die Lagerfähigkeit noch weiter zu erhöhen. Als Trockenmittel eignen sich alle Verbindungen, die mit Wasser unter Bildung einer gegenüber den in der Zusammensetzung vorliegenden reaktiven Gruppen zu inerten Gruppen reagieren. Als Trockenmittel eignen sich beispielsweise Isocyanate und Silane, beispielsweise Vinylsilane wie 3-Vinylpropyltriethoxysilan, Oximosilane oder Carbamatosilane. Aber auch die Verwendung von Methyl-, Ethyl- oder Vinyltrimethoxysilan, Tetramethyl- oder -ethylethoxysilan ist möglich. Vinyltrimethoxysilan und Tetraethoxysilan sind besonders bevorzugt.

In einer bevorzugten Ausführungsform der Erfindung sind die Komponenten der Zusammensetzung miteinander vermischt, insbesondere in Form einer einphasigen Mischung.

Die Erfindung betrifft auch ein Verfahren zur Herstellung der erfindungsgemäßen Zusammensetzung wobei die Komponenten (a), (b) und (c), und gegebenenfalls weitere Komponenten, insbesondere (d), miteinander gemischt werden.

Die Erfindung betrifft ferner die Verwendung der erfindungsgemäßen Zusammensetzung zur Herstellung eines Dichtmittels, Klebstoffs, Beschichtungsmittels, Fugenmaterials, einer Vergussmasse, eines Adhäsives und/oder einer Farbe.

Die Erfindung betrifft auch eine Silikonkautschukmasse, erhältlich durch Aushärten der erfindungsgemäßen Zusammensetzung, vorzugsweise in Gegenwart von Wasser, zum Beispiel in Form von Luftfeuchtigkeit. Die erhältliche Silikonkautschukmasse kann ein Dichtmittel, Klebstoff, Beschichtungsmittel, Fugenmaterial, eine Vergussmasse oder Adhäsiv sein und sie kann in Farben oder zur Herstellung von Farben verwendet werden.

Die Erfindung betrifft ferner ein Verfahren zur Herstellung einer Silikonkautschukmasse durch Aushärten der erfindungsgemäßen Zusammensetzung in Gegenwart von Wasser, zum Beispiel in Form von Luftfeuchtigkeit.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen. Die genannten Vorteile von Merkmalen oder von Kombinationen mehrerer Merkmale sind lediglich beispielhaft und können alternativ oder kumulativ zur Wirkung kommen. Die Kombination von Merkmalen unterschiedlicher Ausführungsformen der Erfindung oder von Merkmalen von unterschiedlichen Patentansprüchen ist abweichend von den gewählten Rückbezügen der Patentansprüche möglich.

Die nachfolgenden Beispiele dienen der weiteren Erläuterung der Erfindung, ohne die Erfindung darauf zu beschränken.

### Beispiele

Die Bestimmung der Massenänderung erfolgte nach DIN EN ISO 10563. Bei den Vergleichsbeispielen handelt es sich um Referenzzusammensetzungen auf Basis am Markt etablierter Dichtstoffe.

### Beispiel 1: DTC

### Zweikomponentendichtstoff (RTV2):

Es wird eine Silikonkautschukmischung gemäß folgender Formulierung hergestellt:
Komponente A:
   496g alpha-omega hydroxyl-terminiertes Polydimethylsiloxan mit Viskosität 80.000 cSt 372g Kreide Socal U
   124g Kreide BLH 3
Komponente B:
   61,3g Polydimethylsiloxan mit Viskosität 100 cSt
   13,0g DTC
   5,3g Hochdisperse Kieselsäure hydrophil
   14,2g Haftvermittler BDC (1-butyl-2,2-dimethoxy-1,2-azasilolidin)
   0,6g Katalysator Dibutylzinn-dilaurat

Die Komponenten A und B werden im Verhältnis 10:1 gemischt und sofort verarbeitet.

Der Dichtstoff hat nach Ausbringung an Luft:
- eine Hautbildungszeit von 20 min
- eine Klebfreizeit von 40 min
- eine Frühbeanspruchung nach 50 min
- eine gute Kerbfestigkeit nach 24 h
- eine Shore-Härte A von 22 nach 4 Tagen
- eine vollständige Durchhärtung (9mm Schichtdicke) nach 4 Tagen
- eine gute Haftung auf Holz, Holz lackiert, Holz lasiert, Aluminium, Aluminium pulverbeschichtet, Glas, PVC, Polyamid, Stahl, Beton, Polyethylen und Plexiglas
- einen Masseverlust von 0,40% (nach DIN 10563)

### Vergleichsbeispiel 1: Methyl-tris(2-Pentanonoxim)silan/Vinyl-tris(2-Pentanonoxim)silan

### 1 Komponentendichtstoff (RTV1):

Es wird eine Siliconkautschukmischung gemäß folgender Formulierung hergestellt:
530g alpha-omega hydroxyl-terminiertes Polydimethylsiloxan mit Viskosität 80.000 cSt 312,8g Polydimethylsiloxan mit Viskosität 100 cSt
13,0g Vinyl-tris(2-Pentanonoxim)silan
30,0g Methyl-tris(2-Pentanonoxim)silan
105g Hochdisperse Kieselsäure hydrophil
8,0g Haftvermittler 5201 (Mischung aus Aminoethylaminopropyltrimethoxysilan und alpha-omega hydroxyl-terminiertes Polydimethylsiloxan)
1,2g Katalysator 271 (Mischung aus Dioctylzinnoxid und Tetrapropoxysilan)

Der Dichtstoff hat nach Ausbringung an Luft:
- eine Hautbildungszeit von 9 min
- eine Klebfreizeit von 23 min
- eine Frühbeanspruchung nach 170 min
- eine gute Kerbfestigkeit nach 24 h
- eine Shore-Härte A von 26 nach 4 Tagen
- eine vollständige Durchhärtung (9mm Schichtdicke) nach 5 Tagen
- eine gute Haftung auf Glas, Holz, Holz lackiert, Holz lasiert, Aluminium, PVC, Polyamid, Stahl, Beton
- einen Masseverlust von 3,8% (nach DIN 10563)

### Vergleichsbeispiel 2: Methyl-tris(2-Pentanonoxim)silan/Vinyl-tris(2-Pentanonoxim)silan

### 2 Komponentendichtstoff (RTV2):

Es wird eine Siliconkautschukmischung gemäß folgender Formulierung hergestellt:
Komponente A:
   361g alpha-omega hydroxyl-terminiertes Polydimethylsiloxan mit Viskosität 80.000 cSt
   225g Polydimethylsiloxan mit Viskosität 100 cSt
   150g Kreide Socal U
   150g Kreide BLH 3
   63g Hochdisperse Kieselsäure hydrophil
Komponente B:
   39,2g Polydimethylsiloxan mit Viskosität 100 cSt
   31,0g Methyl-tris(2-Pentanonoxim)silan
   8,0g Vinyl-tris(2-Pentanonoxim)silan
   10,0g Hochdisperse Kieselsäure hydrophil
   8,0g Haftvermittler 5201
   0,8g Katalysator 271 (Mischung aus Dioctylzinnoxid und Tetrapropoxysilan)

Die Komponenten A und B werden im Verhältnis (Gewicht) 10:1 gemischt und sofort verarbeitet.

Der Dichtstoff hat nach Ausbringung an Luft:
- eine Hautbildungszeit von 7 min
- eine Klebfreizeit von 70 min
- eine Frühbeanspruchung nach 100 min
- eine gute Kerbfestigkeit nach 24 h
- eine Shore-Härte A von 20 nach 4 Tagen
- eine vollständige Durchhärtung (9mm Schichtdicke) nach 2 Tagen
- eine gute Haftung auf Glas, Holz, Holz lackiert, Holz lasiert, Aluminium, PVC, Polyamid, Stahl, Beton und teilweise Plexiglas
- einen Masseverlust von 4,05% (nach DIN 10563)

Die obigen Beispiele zeigen, dass der Masseverlust gegenüber den bekannten Silikonkautschukzusammensetzungen deutlich verringert ist (0,40 Gew.-% in Beispiel 1 gegenüber 3,8 - 4 Gew.-% von herkömmlichen Silikonkautschukzusammensetzungen). Zudem ist die Haftung auf Polyethylen und Plexiglas verbessert.

## Patentansprüche

1. Zusammensetzung, erhältlich durch Vermischen der Komponenten
(a) Vernetzer oder Vernetzermischung, erhältlich durch Reaktion von
(HX(CR^{c}₂)ₒY(CR^{c}₂)ₒX(CR^{c}₂)ₒ)₄₋ₚSiKₚ,
worin
jedes X unabhängig voneinander steht für O, NR^{b}, S, oder PR^{b},
jedes R^{b} unabhängig voneinander steht für H, Trialkylsilyl oder einen gesättigten oder ungesättigten, optional substituierten Kohlenwasserstoffrest mit 1 - 16 C-Atomen,
jedes Y unabhängig voneinander steht für eine C-C-Bindung, CR^{c}₂, O, NR^{e} oder PR^{e}, worin
jedes R^{c} unabhängig voneinander steht für H oder einen gesättigten oder ungesättigten, optional substituierten Kohlenwasserstoffrest mit 1 - 16 C-Atomen,
jedes R^{e} unabhängig voneinander steht für H oder einen gesättigten oder ungesättigten, optional substituierten Kohlenwasserstoffrest mit 1 - 16 C-Atomen,
jedes K unabhängig voneinander steht für Cl, OR^{d} oder ON=CR^{g}₂, jedes R^{d} unabhängig voneinander steht für einen gesättigten oder ungesättigten, optional substituierten Kohlenwasserstoffrest mit 1 - 16 C-Atomen,
jedes R^{g} unabhängig voneinander steht für H oder einen gesättigten oder ungesättigten, optional substituierten Kohlenwasserstoffrest mit 1 - 16 C-Atomen,
jedes o unabhängig voneinander eine ganze Zahl von 1 bis 8 ist und
p = 2 oder 3 ist,
(b) Metallkatalysator und
(c) Aminosilan.

2. Zusammensetzung nach Anspruch 1, **dadurch gekennzeichnet, dass** jedes o unabhängig voneinander eine ganze Zahl von 1 bis 3 ist, und/oder R^{b} = H, Trialkylsilyl oder CH₃ ist, und/oder R^{c} = H und/oder p = 3 ist.

3. Zusammensetzung nach Anspruch 1 oder 2, **dadurch gekennzeichnet, dass** jedes R^{d} unabhängig voneinander steht für Methyl, Ethyl, n-Propyl, iso-Propyl, iso-Butyl, Octyl, iso-Octyl, Vinyl oder Phenyl.

4. Zusammensetzung nach einem der Ansprüche 1 bis 3, **dadurch gekennzeichnet, dass** jedes X unabhängig voneinander steht für O oder NR^{b}.

5. Zusammensetzung nach einem der Ansprüche 1 bis 4, **dadurch gekennzeichnet, dass** Y = N(CR^{c}₂)ₒXH ist, worin R^{c}, o und X wie oben definiert sind, bevorzugt **dadurch gekennzeichnet, dass** R^{c} = H, o = 2 oder 3 und/oder X = O oder NR^{b} sind.

6. Zusammensetzung nach einem der Ansprüche 1 bis 5, **dadurch gekennzeichnet, dass** (HX(CR^{c}₂)ₒY(CR^{c}₂)ₒX(CR^{c}₂)ₒ)₄₋ₚSiKₚ für (CH₃O)₃Si(CH₂)₃NH(CH₂)₂NH(CH₂)₂NH₂ steht.

7. Zusammensetzung nach einem der Ansprüche 1 bis 6, **dadurch gekennzeichnet, dass** das Metall des Metallkatalysators ausgewählt ist aus der Gruppe bestehend aus Na, Zn, Sc, Nd, Ti, Zr, Hf, V, Fe, Pt, Cu, Ga, Ca, Sn und Bi, bevorzugt ausgewählt ist aus der Gruppe bestehend aus Ti, Zr, Zn, Ca, Sn und Bi.

8. Zusammensetzung nach einem der Ansprüche 1 bis 7, **dadurch gekennzeichnet, dass** die Zusammensetzung erhältlich ist durch zusätzliches Vermischen mit der Komponente
(d) Polyorganosiloxan der Formel HO-(SiR^{q}R^{r}O)ₛ-H umfasst, wobei
jedes R^{q} und R^{r} unabhängig voneinander steht für einen gesättigten oder ungesättigten, optional substituierten Kohlenwasserstoffrest mit 1 - 16 C-Atomen und s eine ganze Zahl von 5 bis 5000 ist.

9. Zusammensetzung nach Anspruch 8, **dadurch gekennzeichnet, dass** jedes R^{q} und R^{r} unabhängig voneinander steht für
einen optional substituierten Alkyl-, Alkenyl- oder Alkinylrest;
einen optional substituierten cycloaliphatischen Rest, Arylrest oder Aralkylrest; oder einen optional substituierten heteroalicyclischen Rest oder Heteroarylrest, jeweils mit 1 - 16 C-Atomen.

10. Zusammensetzung, umfassend
(a) mindestens einen Vernetzer der Formel (X(CR^{c}₂)ₒ Z(CR^{c}₂)ₒZ(CR^{c}₂)ₒ)Si, worin jedes Z unabhängig voneinander steht für N, P, N(CR^{c}₂)ₒX oder P(CR^{c}₂)ₒX und X, R^{c} und o wie oben definiert sind,
(b) mindestens einen Metallkatalysator und
(c) mindestens ein Aminosilan.

11. Zusammensetzung nach Anspruch 10, **dadurch gekennzeichnet, dass** der Vernetzer 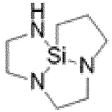 umfasst.

12. Zusammensetzung nach Anspruch 10 oder 11, **dadurch gekennzeichnet, dass** die Zusammensetzung zusätzlich
(d) ein Polyorganosiloxan der Formel HO-(SiR^{q}R^{r}O)ₛ-H umfasst, wobei
jedes R^{q} und R^{r} unabhängig voneinander steht für einen gesättigten oder ungesättigten, optional substituierten Kohlenwasserstoffrest mit 1 - 16 C-Atomen und s eine ganze Zahl von 5 bis 5000 ist.

13. Zusammensetzung nach Anspruch 12, **dadurch gekennzeichnet, dass** jedes R^{q} und R^{r} unabhängig voneinander steht für
einen optional substituierten Alkyl-, Alkenyl- oder Alkinylrest;
einen optional substituierten cycloaliphatischen Rest, Arylrest oder Aralkylrest; oder einen optional substituierten heteroalicyclischen Rest oder Heteroarylrest, jeweils mit 1 - 16 C-Atomen.

14. Verwendung einer Zusammensetzung nach einem der Ansprüche 1 bis 13 zur Herstellung eines Dichtmittels, Klebstoffs, Beschichtungsmittels, Fugenmaterials, Vergussmasse, Adhäsiv oder einer Farbe.

15. Gehärtete Silikonkautschukmasse, erhältlich durch Aushärten einer Zusammensetzung nach einem der Ansprüche 8-9 oder 12-13, bevorzugt in Gegenwart von Luftfeuchtigkeit.

## Claims

1. Composition, obtainable by mixing the components
(a) Crosslinker or crosslinker mixture, obtainable by reaction of
(HX(CR^{c}₂)ₒY(CR^{c}₂)ₒX(CR^{c}₂)ₒ)₄₋ₚSiKₚ,
wherein
each X independently represents O, NR^{b}, S, or PR^{b},
each R^{b} independently represents H, trialkylsilyl or a saturated or unsaturated, optionally substituted hydrocarbon residue with 1 - 16 carbon atoms,
each Y independently represents a C-C bond, CR^{c}₂, O, NR^{e} or PR^{e}, wherein
each R^{c} independently represents H or a saturated or unsaturated, optionally substituted hydrocarbon residue having 1 - 16 carbon atoms,
each R^{e} independently represents H or a saturated or unsaturated, optionally substituted hydrocarbon residue with 1 - 16 carbon atoms,
each K independently represents Cl, OR^{d} or ON=CR^{g}₂,
each R^{d} independently represents a saturated or unsaturated, optionally substituted hydrocarbon residue having 1 - 16 carbon atoms,
each R^{g} independently represents H or a saturated or unsaturated, optionally substituted hydrocarbon residue having 1 - 16 carbon atoms,
each o is independently an integer from 1 to 8 and
p = 2 or 3,
(b) Metal catalyst and
(c) Amino silane.

2. Composition according to claim 1, **characterized in that** each o is independently an integer from 1 to 3, and/or R^{b} = H, trialkylsilyl or CH₃, and/or R^{c} = H and/or p = 3.

3. Composition according to claim 1 or 2, **characterized in that** each R^{d} independently represents methyl, ethyl, n-propyl, iso-propyl, iso-butyl, octyl, iso-octyl, vinyl or phenyl.

4. Composition according to any one of claims 1 to 3, **characterized in that** each X independently represents O or NR^{b}.

5. Composition according to any one of claims 1 to 4, **characterized in that** Y = N(CR^{c}₂)ₒXH, wherein R^{c}, o and X are as defined above, preferably **characterized in that** R^{c} = H, o = 2 or 3 and/or X = O or NR^{b}.

6. Composition according to any one of claims 1 to 5, **characterized in that** (HX(CR^{c}₂)ₒY(CR^{c}₂)ₒX(CR^{c}₂)ₒ)₄₋ₚSiKₚ is (CH₃O)₃Si(CH₂)₃NH(CH₂)₂NH(CH₂)₂NH₂.

7. Composition according to any one of claims 1 to 6, **characterized in that** the metal of the metal catalyst is selected from the group consisting of Na, Zn, Sc, Nd, Ti, Zr, Hf, V, Fe, Pt, Cu, Ga, Ca, Sn and Bi, preferably selected from the group consisting of Ti, Zr, Zn, Ca, Sn and Bi.

8. Composition according to any one of claims 1 to 7, **characterized in that** the composition is obtainable by additional mixing with the component
(d) polyorganosiloxane of the formula HO-(SiR^{q}R^{r}O)ₛ-H, wherein
each R^{q} and R^{r} independently represents a saturated or unsaturated, optionally substituted hydrocarbon residue having 1 - 16 carbon atoms and s is an integer from 5 to 5000.

9. Composition according to claim 8, **characterized in that** each R^{q} and R^{r} independently represents
an optionally substituted alkyl, alkenyl or alkynyl residue;
an optionally substituted cycloaliphatic residue, aryl residue or aralkyl residue; or an optionally substituted heteroalicyclic residue or heteroaryl residue, in each case having 1 - 16 carbon atoms.

10. Composition, comprising
(a) at least one crosslinker of the formula (X(CR^{c}₂)ₒZ(CR^{c}₂)ₒZ(CR^{c}₂)ₒ)Si, wherein each Z independently represents N, P, N(CR^{c}₂)ₒX or P(CR^{c}₂)ₒX and X, R^{c} and o are defined as above,
(b) at least one metal catalyst and
(c) at least one amino silane.

11. Composition according to claim 10, **characterized in that** the crosslinker comprises

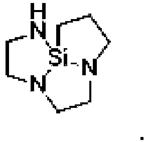

12. Composition according to claim 10 or 11, **characterized in that** the composition additionally comprises
(d) a polyorganosiloxane of the formula HO-(SiR^{q}R^{r}O)ₛ-H, wherein
each R^{q} and R^{r} independently represents a saturated or unsaturated, optionally substituted hydrocarbon residue having 1 - 16 carbon atoms and s is an integer from 5 to 5000.

13. Composition according to claim 12, **characterized in that** each R^{q} and R^{r} independently represents
an optionally substituted alkyl, alkenyl or alkynyl residue;
an optionally substituted cycloaliphatic residue, aryl residue or aralkyl residue; or
an optionally substituted heteroalicyclic residue or heteroaryl residue, in each case having 1 - 16 carbon atoms.

14. Use of a composition according to any one of claims 1 to 13 for the production of a sealant, glue, coating agent, jointing material, potting compound, adhesive or paint.

15. Cured silicone rubber compound obtainable by curing a composition according to any one of claims 8-9 or 12-13, preferably in the presence of humidity.

## Revendications

1. Composition pouvant être obtenue par mélange des composants :
(a) un agent de réticulation ou un mélange d'agents de réticulation, pouvant être obtenu par réaction de
(HX(CR^{c}₂)ₒY(CR^{c}₂)ₒX(CR^{c}₂)ₒ)₄₋ₚSiKₚ,
où
chaque X représente indépendamment O, NR^{b}, S, ou PR^{b},
chaque R^{b} représente indépendamment H, un groupe trialkylsilyle ou un groupe hydrocarboné saturé ou insaturé, éventuellement substitué, comportant de 1 à 16 atomes de carbone,
chaque Y représente indépendamment une liaison C-C, CR^{c}₂, O, NR^{e} ou PR^{e}, où
chaque R^{c} représente indépendamment H ou un groupe hydrocarboné saturé ou insaturé, éventuellement substitué, comportant de 1 à 16 atomes de carbone,
chaque R^{e} représente indépendamment H ou un groupe hydrocarboné saturé ou insaturé, éventuellement substitué, comportant de 1 à 16 atomes de carbone,
chaque K représente indépendamment Cl, OR^{d} ou ON=CR^{g}₂ ,
chaque R^{d} représente indépendamment un groupe hydrocarboné saturé ou insaturé, éventuellement substitué, comportant de 1 à 16 atomes de carbone,
chaque R^{g} représente indépendamment H ou un groupe hydrocarboné saturé ou insaturé, éventuellement substitué, comportant de 1 à 16 atomes de carbone,
chaque o est indépendamment un entier de 1 à 8 et
p = 2 ou 3,
(b) un catalyseur métallique et
(c) un aminosilane.

2. Composition selon la revendication 1, **caractérisée en ce que** chaque o est indépendamment un entier de 1 à 3, et/ou R^{b} = H, un groupe trialkylsilyle ou CH₃, et/ou R^{c} = H et/ou p = 3.

3. Composition selon la revendication 1 ou 2, **caractérisée en ce que** chaque R^{d} représente indépendamment un groupe méthyle, éthyle, n-propyle, isopropyle, isobutyle, octyle, isooctyle, vinyle ou phényle.

4. Composition selon l'une des revendications 1 à 3, **caractérisée en ce que** chaque X représente indépendamment O ou NR^{b}.

5. Composition selon l'une des revendications 1 à 4, **caractérisée en ce que** Y = N(CR^{c}₂)ₒXH, où R^{c}, o et X sont tels que définis ci-dessus, de préférence **caractérisée en ce que** R^{c} = H, o = 2 ou 3 et/ou X = O ou NR^{b}.

6. Composition selon l'une des revendications 1 à 5, **caractérisée en ce que** (HX(CR^{c}₂)ₒY(CR^{c}₂)ₒX(CR^{c}₂)ₒ)₄₋ₚSiK_{P} représente
(CH₃O)₃Si(CH₂)₃NH(CH₂)₂NH(CH₂)₂NH₂.

7. Composition selon l'une des revendications 1 à 6, **caractérisée en ce que** le métal du catalyseur métallique est choisi parmi le groupe constitué de Na, Zn, Sc, Nd, Ti, Zr, Hf, V, Fe, Pt, Cu, Ga, Ca, Sn et Bi, de préférence est choisi parmi le groupe constitué de Ti, Zr, Zn, Ca, Sn et Bi.

8. Composition selon l'une des revendications 1 à 7, **caractérisée en ce que** la composition peut être obtenue par mélange supplémentaire avec le composant :
(d) un polyorganosiloxane de formule HO-(SiR^{q}R^{r}O)ₛ-H où
chaque R^{q} et R^{r} représente indépendamment un groupe hydrocarboné saturé ou insaturé, éventuellement substitué, comportant de 1 à 16 atomes de carbone, et s est un entier de 5 à 5 000.

9. Composition selon la revendication 8, **caractérisée en ce que** chaque R^{q} et R^{r} représente indépendamment
un groupe alkyle, alcényle ou alcynyle éventuellement substitué ;
un groupe cycloaliphatique, aryle ou aralkyle éventuellement substitué ; ou
un groupe hétéroalicyclique ou hétéroaryle éventuellement substitué, chacun comportant de 1 à 16 atomes de carbone.

10. Composition, comprenant
(a) au moins un agent de réticulation de formule (X(CR^{c}₂)ₒZ(CR^{c}₂)ₒZ(CR^{c}₂)ₒ)Si, où chaque Z représente indépendamment N, P, N(CR^{c}₂)ₒX ou P(CR^{c}₂)ₒX et X, R^{c} et o sont tels que définis ci-dessus,
(b) au moins un catalyseur métallique et
(c) au moins un aminosilane.

11. Composition selon la revendication 10, **caractérisée en ce que** l'agent de réticulation comprend

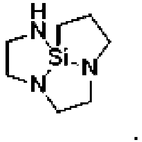

12. Composition selon la revendication 10 ou 11, **caractérisée en ce que** la composition comprend en outre
(d) un polyorganosiloxane de formule HO-(SiR^{q}R^{r}O)ₛ-H, où
chaque R^{q} et R^{r} représente indépendamment un groupe hydrocarboné saturé ou insaturé, éventuellement substitué, comportant de 1 à 16 atomes de carbone, et s est un entier de 5 à 5 000.

13. Composition selon la revendication 12, **caractérisée en ce que** chaque R^{q} et R^{r} représente indépendamment
un groupe alkyle, alcényle ou alcynyle éventuellement substitué ;
un groupe cycloaliphatique, aryle ou aralkyle éventuellement substitué ; ou
un groupe hétéroalicyclique ou hétéroaryle éventuellement substitué, chacun comportant de 1 à 16 atomes de carbone.

14. Utilisation d'une composition selon l'une des revendications 1 à 13 pour la fabrication d'un moyen d'étanchéité, d'un adhésif, d'un moyen de revêtement, de matériaux de jointement, d'une masse de scellement, d'un agent d'adhésion ou d'une peinture.

15. Masse de caoutchouc de silicone durcie, pouvant être obtenue par durcissement d'une composition selon l'une des revendications 8 à 9 ou 12 à 13, de préférence en présence d'humidité de l'air.
